# EUROPEAN PATENT APPLICATION

(11) **EP 4 660 777 A1**
(43) Date of publication of application: **10.12.2025**
(21) Application number: 24771117.9
(22) Date of filing: 07.03.2024
(51) Int. Cl.: G06F 3/14, H04W 4/80

(54) **ELECTRONIC DEVICE AND OPERATION METHOD THEREOF**

(30) Priority: 16.03.2023 KR 20230034572
(71) Applicant: Samsung Electronics Co., Ltd., Suwon-si, Gyeonggi-do 16677 (KR)
(72) Inventor: LEE, Jongin, Suwon-si, Gyeonggi-do 16677 (KR); KIM, Sehyun, Suwon-si, Gyeonggi-do 16677 (KR)
(74) Representative: Appleyard Lees IP LLP
(86) International application number: PCT/KR2024/002960
(87) International publication number: WO 2024/191117

(57) **Abstract**

Disclosed is an electronic device including a display, a user input unit, a communication unit, a memory storing one or more instructions, and at least one processor configured to execute the one or more instructions stored in the memory, wherein the at least one processor is configured to execute the one or more instructions to output a device list via the display, in response to receiving a request for external signal sharing, receive, via the user input unit, a selection of an external device to provide an image signal and an external electronic device to transmit or receive an image signal, from the device list, and transmit or receive an image signal of the selected external device to the external electronic device or from the external electronic device, via the communication unit.

## Description

### Technical Field

Disclosed various embodiments relate to an electronic device and an operation method thereof, and more particularly, to an electronic device for executing an external signal sharing function and an operation method thereof.

### Background Art

With the advancement of technology, electronic devices are capable of receiving content from external devices and outputting the received content. For example, an electronic device such as a digital television may be connected to various external devices such as a set-top box, a home theater system, a game console, or a digital versatile disc (DVD) player, may receive various types of content from the external devices, and may output the received content.

In some cases, an electronic device may attempt to transmit content received from an external device to another electronic device that is not the electronic device itself. Alternatively, the other electronic device that is not the electronic device itself may attempt to use content from the external device.

Therefore, there is a demand for a function allowing a plurality of electronic devices to share content from an external device.

### Disclosure of Invention

### Solution to Problem

According to an embodiment, an electronic device may include a display, a user input unit, a communication unit, a memory storing one or more instructions, and at least one processor configured to execute the one or more instructions stored in the memory.

In an embodiment, the at least one processor may be configured to execute the one or more instructions to output a device list via the display, in response to receiving a request for external signal sharing.

In an embodiment, the at least one processor may be configured to execute the one or more instructions to receive, via the user input unit, a selection of an external device to provide an image signal and an external electronic device to transmit or receive an image signal, from the device list.

### Brief Description of Drawings

FIG. 1 is a diagram illustrating a first electronic device and a second electronic device that execute an external signal sharing function, according to an embodiment.
FIG. 2 illustrates block diagrams of a first electronic device and a second electronic device, according to an embodiment.
FIG. 3 is a block diagram of a first electronic device according to an embodiment.
FIG. 4 is a flowchart illustrating an operation method of an electronic device, according to an embodiment.
FIG. 5 is a diagram illustrating a user interface screen for receiving a selection as to whether an electronic device is a source device or a sink device, according to an embodiment.
FIG. 6 is a diagram illustrating a device list according to an embodiment.
FIG. 7A is a diagram illustrating a device list according to an embodiment.
FIG. 7B is a diagram illustrating a device list according to an embodiment.
FIG. 8A illustrates a source device that operates in a standby mode and outputs a user interface screen as to whether to accept external signal sharing, according to an embodiment.
FIG. 8B illustrates a source device that operates in a normal mode and outputs a user interface screen as to whether to accept external signal sharing, according to an embodiment.
FIG. 8C illustrates a case in which a sink device outputs a user interface screen as to whether to accept external signal sharing.
FIG. 9 is a diagram illustrating a source device that outputs an image signal from an external device, according to an embodiment.
FIG. 10 is a diagram illustrating an electronic device that outputs a user interface screen for a control authority transfer request, according to an embodiment.
FIG. 11 is a diagram illustrating a source device that outputs a control authority forcible transfer user interface screen, according to an embodiment.
FIG. 12 is a block diagram of a first electronic device according to an embodiment.
FIG. 13 is a flowchart illustrating a procedure in which a plurality of electronic devices perform an external signal sharing function, according to an embodiment.
FIG. 14 is a flowchart illustrating a procedure in which a plurality of electronic devices perform an external signal sharing function, according to an embodiment.
FIG. 15 is a flowchart illustrating a source device that outputs an image signal of an external device, according to an embodiment.
FIG. 16 is a flowchart of transferring control authority, according to an embodiment.
FIG. 17 is a flowchart of transferring control authority, according to an embodiment.
FIG. 18 is a flowchart illustrating a method by which a source device forcibly takes over control authority with respect to an external device from a source device, according to an embodiment.

### Mode for the Invention

According to an embodiment, an electronic device may include a display, a user input unit, a communication unit, a memory storing one or more instructions, and at least one processor configured to execute the one or more instructions stored in the memory.

In an embodiment, the at least one processor may be configured to execute the one or more instructions to output a device list via the display, in response to receiving a request for external signal sharing.

In an embodiment, the at least one processor may be configured to execute the one or more instructions to receive, via the user input unit, a selection of an external device to provide an image signal and an external electronic device to transmit or receive an image signal, from the device list.

In an embodiment, the at least one processor may be configured to execute the one or more instructions to transmit or receive an image signal of the selected external device to the external electronic device or from the external electronic device, via the communication unit.

In an embodiment, an operation method of an electronic device may include receiving a request for external signal sharing.

In an embodiment, the operation method of the electronic device may include outputting a device list, in response to receiving the request for execution of the external signal sharing function.

In an embodiment, the operation method of the electronic device may include receiving a selection of an external device to provide an image signal and an external electronic device to transmit or receive an image signal, from the device list.

In an embodiment, the operation method of the electronic device may include transmitting or receiving an image signal of the selected external device to the external electronic device or from the external electronic device.

In an embodiment, a recording medium may be a computer-readable recording medium having recorded thereon a program for executing, on a computer, an operation method of an electronic device, the operation method including receiving a request for external signal sharing.

In an embodiment, a recording medium may be a computer-readable recording medium having recorded thereon a program for executing, on a computer, an operation method of an electronic device, the operation method including outputting a device list, in response to receiving the request for execution of the external signal sharing function.

In an embodiment, a recording medium may be a computer-readable recording medium having recorded thereon a program for executing, on a computer, an operation method of an electronic device, the operation method including receiving a selection of an external device to provide an image signal and an external electronic device to transmit or receive an image signal, from the device list.

In an embodiment, a recording medium may be a computer-readable recording medium having recorded thereon a program for executing, on a computer, an operation method of an electronic device, the operation method including transmitting or receiving an image signal of the selected external device to the external electronic device or from the external electronic device.

Throughout the present disclosure, the expression "at least one of a, b or c" indicates only a, only b, only c, both a and b, both a and c, both b and c, all of a, b, and c, or variations thereof.

Hereinafter, an embodiment of the present disclosure will now be described more fully with reference to the accompanying drawings for one of ordinary skill in the art to be able to perform the embodiment without any difficulty. The present disclosure may, however, be embodied in many different forms and should not be construed as being limited to the embodiment set forth herein.

Although the terms used in the present disclosure are selected from among common terms that are currently used, in consideration of their functions in the present disclosure, the terms may vary according the intention of one of ordinary skill in the art, a precedent, or the advent of new technology. Therefore, the terms used in the present disclosure are not merely designations of the terms, but the terms are defined based on the meaning of the terms and content throughout the present disclosure.

In addition, the terms used in the present disclosure are merely intended to describe specific embodiments, and are not intended to limit the present disclosure.

Throughout the specification, it will also be understood that when an element is referred to as being "connected to" or "coupled with" another element, it can be directly connected to or coupled with the other element, or it can be electrically connected to or coupled with the other element by having an intervening element interposed therebetween.

In the detailed description, in particular, in claims, the use of the term "the" and similar indicating terms may correspond to singular and plural forms. The steps of all methods described in the present disclosure can be performed in any appropriate order unless otherwise indicated herein or otherwise clearly contradicted by context. The present disclosure is not limited by the steps described herein.

Throughout the specification, the expression "in some embodiments" or "in an embodiment" is described, but the expression does not necessarily indicate the same embodiment.

Some embodiments of the present disclosure may be described in terms of functional block configurations and various processing steps. Some or all of functional blocks may be realized by any number of hardware and/or software configurations configured to perform the specified functions. For example, the functional blocks of the present disclosure may be implemented by one or more microprocessors, or may be implemented by circuitry configurations for predetermined functions. In addition, for example, the functional blocks of the present disclosure may be implemented with any programming or various scripting languages. The functional blocks may be implemented in algorithms that are executed on one or more processors. Furthermore, the present disclosure could employ any number of techniques according to the related art for electronics configuration, signal processing and/or data processing, and the like. The terms "mechanism", "element", "means", "configuration", or the like may be broadly used and are not limited to mechanical or physical embodiments.

Furthermore, connecting lines or connectors between elements shown in drawings are intended to represent exemplary functional connection and/or physical or circuitry connection between the elements. It should be noted that many alternative or additional functional connections, physical connections or circuitry connections may be present in a practical device.

Also, the terms such as "... unit," "module," or the like used in the present disclosure indicate a unit, which processes at least one function or operation, and the unit may be implemented by hardware or software, or by a combination of hardware and software.

Also, the term "user" used in the specification may indicate a person who uses an electronic device, and may include a consumer, an evaluator, a viewer, an administrator, or an installation technician.

Hereinafter, the present disclosure will now be described in detail with reference to the accompanying drawings.

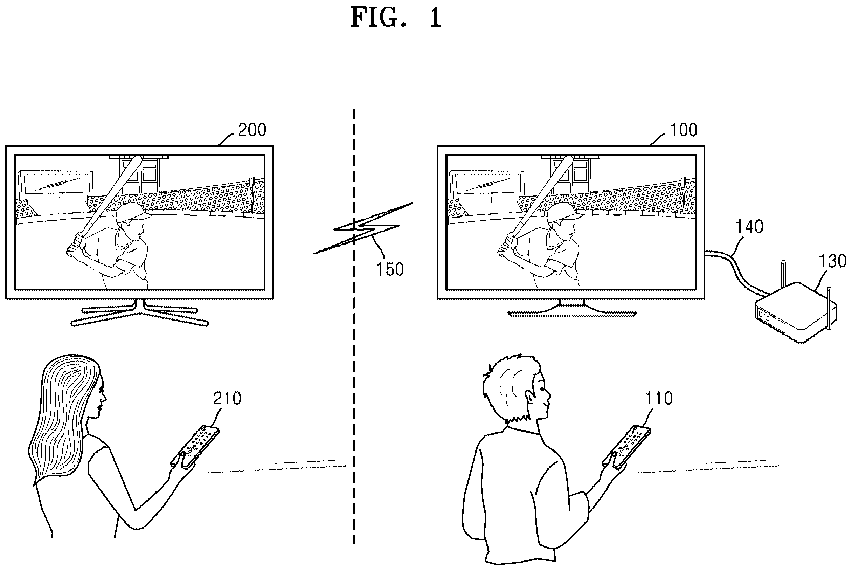

FIG. 1 is a diagram illustrating a first electronic device 100 and a second electronic device 200 that execute an external signal sharing function, according to an embodiment.

Referring to FIG. 1, the first electronic device 100 and the second electronic device 200 may share, by using the external signal sharing function, an image signal provided by an external device 130.

In an embodiment, the external signal sharing function may indicate a function in which an electronic device and an external electronic device external to the electronic device share an image signal from an external device.

In an embodiment, sharing an image signal may mean that the image signal from the same external device is used by a plurality of electronic devices, not one electronic device.

In an embodiment, using an image signal by the electronic device may include the electronic device transmitting the image signal received from the external device to an external electronic device external to the electronic device.

In an embodiment, using an image signal by the electronic device may include the electronic device receiving the image signal of the external device from the external electronic device connected to the external device.

In an embodiment, using an image signal by the electronic device may include the electronic device outputting an image signal received from the external device or received from the external electronic device or being in a state capable of outputting the image signal.

For example, each of the plurality of electronic devices may output an image signal from the external device via each display. For example, when an electronic device is connected to the external device, the electronic device may receive an image signal from the external device, and may output the image signal received from the external device via a display of the electronic device. Also, the electronic device may transmit an image signal received from the external device to the external electronic device. The external electronic device received the image signal of the external device from the electronic device may output the image signal of the external device via a display of the external electronic device.

Alternatively, some of the plurality of electronic devices using an external signal sharing function may output an image signal of the external device received from the external device or the external electronic device, and the remaining electronic devices may be in a state of not outputting the image signal of the external device but capable of outputting the image signal of the external device.

A state in which an image signal may be output may indicate a state in which a screen of the electronic device is currently turned off or an image of another source is output via a display, but, when a user of the user device selects to output an image provided by the external device, the electronic device may receive an image signal from the external device or may receive the image signal of the external device from the external electronic device and thus may output the image signal of the external device via the display of the electronic device.

In an embodiment, the plurality of electronic devices may share an image signal of the external device. In an embodiment, sharing the image signal of the external device by the plurality of electronic devices may mean the electronic device transmitting an image signal of the external device to the external electronic device or receiving an image signal of the external device from the external electronic device.

In an embodiment, the plurality of electronic devices may include a source device and a sink device.

In an embodiment, an electronic device that is connected to an external device, receives an image signal from the external device, and processes and transmits the image signal to an external electronic device is referred to as the source device. Also, a device external to the electronic device, which receives an image signal from the electronic device connected to an external device, is an electronic device referred to as the sink device.

In an embodiment, the source device and the sink device may share an image signal of the external device.

In an embodiment, sharing the image signal of the external device by the source device and the sink device may include the source device connected to the external device transmitting the image signal received from the external device to the sink device.

For example, the source device may output the image signal received from the external device via a display of the source device, or, while the display of the source device is turned off or outputs an image of another source via the display of the source device, the source device may perform only an operation of receiving an image signal from the external device and transmitting it to the sink device without separately outputting the image signal. In this manner, a case in which the source device does not output the image signal received from the external device via a screen of the source device but temporarily stores, in a memory, the image signal received from the external device and immediately bypasses the image signal to the sink device,, may also be included in that the source device and the sink device share the image signal.

In an embodiment, the source device and the sink device sharing an image signal may include the sink device receiving an image signal of an external device from the source device that is connected to the external device and received the image signal from the external device. In an embodiment, the sink device that receives an image signal from the source device may be one electronic device or may correspond to a plurality of electronic devices. In an embodiment, the source device may transmit an image signal received from the external device.

In an embodiment, the external device may be a device that transmits, to the electronic device, various types of content generated by contents providers. A content provider may refer to a terrestrial broadcaster, a cable broadcaster, satellite broadcaster, an Internet protocol television (IPTV) service provider, or an over-the-top (OTT) service provider that provides various types of content to consumers, or a server operator that provides various types of content. Content may include a still image, a video such as a moving picture, etc., audio, subtitles, other additional information, or the like.

In an embodiment, the external device may be implemented as any type of devices such as a set-top box, a personal computer (PC), a Blu-ray disc player, a mobile phone, a game console, a home theater, an audio player, a universal serial bus (USB), or the like.

In an embodiment, the first electronic device 100 and the second electronic device 200 may be connected via a communication network 150. The communication network 150 may be a wired or wireless network.

In an embodiment, FIG. 1 illustrates a case in which the first electronic device 100 is a source device and the second electronic device 200 is a sink device. In an embodiment, the first electronic device 100 as the source device may receive an image signal from the external device 130 and may transmit the image signal to the second electronic device 200. In an embodiment, the second electronic device 200 as the sink device may receive the image signal of the external device 130 from the first electronic device 100.

Referring to FIG. 1, it is shown that the first electronic device 100 operates as the source device and the second electronic device 200 operates as the sink device, but the present disclosure is not limited thereto, and in another situation, the first electronic device 100 may operate as a sink device and the second electronic device 200 may operate as a source device. For example, in a case where the first electronic device 100 receives an image signal of an external device from the second electronic device 200 connected to the external device, the first electronic device 100 operates as the sink device and the second electronic device 200 operates as the source device.

In an embodiment, a source device and a sink device that perform an external signal sharing function may be display devices capable of outputting an image.

In an embodiment, the source device and the sink device may perform a same operation, except when the source device performs its unique operation or the sink device performs its unique operation. That is, the first electronic device 100 and the second electronic device 200 may perform a same operation, except when they perform a unique operation as the source device or the sink device.

Hereinafter, in the present disclosure, the "first electronic device 100" and the "second electronic device 200" may be collectively referred to as an "electronic device". That is, in the present disclosure, the term "electronic device" is used to indicate at least one of the first electronic device 100 and the second electronic device 200. Also, when the electronic device indicates the first electronic device 100, the second electronic device 200 may be referred to as an external electronic device, and when the electronic device indicates the second electronic device 200, the first electronic device 100 may be referred to as an external electronic device.

In an embodiment, the electronic device may be an image display device capable of outputting an image. In an embodiment, the electronic device may be implemented as various forms of electronic devices. The electronic device may be stationary or mobile.

In an embodiment, the electronic device may include at least one of a desktop computer, a smartphone, a tablet PC, a mobile phone, a video phone, an electronic book reader (e-book reader), a laptop PC, a netbook computer, a digital camera, a personal digital assistant (PDA), a portable multimedia player (PMP), a camcorder, a navigation device, a wearable device, a smartwatch, a home network system, a security system, and a medical device.

The electronic device may be implemented as a flat display device, a curved display device having a screen with curvature, or a flexible display device of which curvature is adjustable. For example, output resolution of the electronic device may have various resolutions such as high definition (HD), full HD, ultra-HD, or a resolution clearer than ultra-HD.

In an embodiment, the second electronic device 200 may be an electronic device different from the first electronic device 100 and may be an electronic device located in a space physically separate from the first electronic device 100. For example, the first electronic device 100 and the external device 130 may be located in a living room, and the second electronic device 200 may be located in a main room. However, the present disclosure is not limited thereto, and the second electronic device 200 and the first electronic device 100 may be located adjacent to each other in one same space, e.g., a living room.

In an embodiment, a user of the first electronic device 100 and a user of the second electronic device 200 may be the same user or different users.

In an embodiment, a first control device 110 may be a first control device-dedicated remote controller capable of controlling only the first electronic device 100. Also, in an embodiment, a second control device 210 may be a second control device-dedicated remote controller capable of controlling only the second electronic device 200. The first electronic device 100 may be controlled by a control signal from the first control device 110, and the second electronic device 200 may be controlled by a control signal from the second control device 210.

Alternatively, in an embodiment, at least one of the first control device 110 and the second control device 210 may be a multi-brand remote controller capable of controlling other electronic devices as well as the first electronic device 100 and the second electronic device 200. When a control device is the multi-brand remote controller, a user may control, by using the multi-brand remote controller, the first electronic device 100, the second electronic device 200, and the external device 130 together.

In an embodiment, the external device 130 may provide various types of content to an electronic device. FIG. 1 illustrates a case in which the external device 130 is a set-top box, but the present disclosure is not limited thereto. In an embodiment, the external device 130 may include one or more of a PC, a DVD player, a home theater, an audio player, a USB, a video game console, and an audio/video (AV) receiver, as well as the set-top box. Also, the external device 130 may be a cable receiving device or a satellite broadcasting receiver, which receives content via radio waves or cables. Also, the external device 130 may be an Internet receiving device that receives content from an OTT service provider that provides content via an Internet network. When the external device 130 is a set-top box, the set-top box may operate as an Internet receiving device.

The external device 130 may be connected to the electronic device via a wired communication network or a wireless communication network and may provide various pieces of content to the electronic device.

In an embodiment, the external device 130 and the first electronic device 100 may be connected via a wired cable 140 and may transmit or receive an image signal. The wired cable 140 may include a port such as a USB port, a high-definition multimedia interface (HDMI) port, a DisplayPort (DP) port, or a Thunderbolt^{™} port, which are capable of simultaneously transmitting a video signal and an audio signal. Alternatively, the wired cable 140 may include a port for separately transmitting a video signal and an audio signal.

In an embodiment, the first electronic device 100 operating as the source device may include an external device interface. In an embodiment, the first electronic device 100 may be connected to the external device 130 via the external device interface and may transmit or receive information to or from the external device 130.

In an embodiment, the external device interface may receive a video, audio, additional information, etc. from the external device 130, an external server, or the like. The external device interface may include a port capable of receiving a signal from the wired cable 140. For example, when the wired cable 140 is an HDMI interface, the external device interface may include an HDMI port.

The HDMI interface may include a plurality of independent communication channels/lines including transition minimized differential signaling (TMDS), display data channel (DDC), consumer electronics control (CEC), hot plug detect (HPD), or the like. The source device and the external device 130 may transmit or receive an audio signal and/or a video signal, device information, control information, etc. via channels included in the HDMI interface.

In an embodiment, the source device and the external device 130 may transmit or receive a control command via a CEC channel. For example, the source device and the external device 130 may perform functions of automatic power on, automatic signal routing, single-point remote control, or the like via the CEC channel.

In an embodiment, the source device may obtain identification information of the external device 130 via the CEC channel. The identification information of the external device 130 may include a device type of the external device 130, a company that manufactured a product, a model name of the product, a unique identification number, an identification name, or the like.

Alternatively, in an embodiment, the source device may obtain the identification information of the external device 130 from an input signal transmitted by the external device 130. For example, the source device may receive an info-frame from the external device 130 via the HDMI interface. The info-frame may include a video stream, an audio stream, identification information, or the like. The source device may obtain the identification information of the external device 130 from the info-frame.

In an embodiment, the first electronic device 100 may be connected to the external device 130 via, instead of the wired cable 140, a wireless network following a communication standard such as Bluetooth, a wireless local area network (WLAN) (e.g., Wi-Fi), wireless broadband (WiBro), Worldwide Interoperability for Microwave Access (WiMAX), code-division multiple access (CDMA), wideband CDMA (WCDMA), or the like, and may receive an image signal from the external device 130.

In an embodiment, the electronic device may receive a request for external signal sharing. For example, referring to FIG. 1, one of the first electronic device 100 and the second electronic device 200 may receive a request for execution of an external signal sharing function (external signal sharing). For example, a user of the first electronic device 100 may transmit by using the first control device 110, a control signal for requesting external signal sharing to the first electronic device 100.

In an embodiment, in response to receiving the request for external signal sharing, the electronic device may output a device list via a display.

In an embodiment, the device list may be a list including information about an external electronic device to execute the external signal sharing function with the electronic device and information about an external device.

As described above, when the electronic device indicates the first electronic device 100, the second electronic device 200 may be referred to as an external electronic device, and when the electronic device indicates the second electronic device 200, the first electronic device 100 may be referred to as an external electronic device,

In an embodiment, a user may select an external device to provide an image signal and an external electronic device to share the image signal with the electronic device, from the device list output via the display.

In an embodiment, in response to receiving the request for external signal sharing, the electronic device may scan an external electronic device to execute the external signal sharing function with the electronic device.

In an embodiment, the electronic device may scan an external electronic device that uses the same local network as the electronic device received the request for external signal sharing, and/or an external electronic device that has the same user account as the electronic device received the request for execution of a share function.

In an embodiment, when an external electronic device that uses the same local network as the first electronic device 100 and/or an external electronic device that has the same user account as the first electronic device 100 are scanned, the electronic device may generate an external device list including information about the scanned external electronic devices.

In an embodiment, the information about the external electronic devices may include identification information of the external electronic devices, which includes a device name, a model name, a unique identification number, etc. of each external electronic device. Furthermore, in an embodiment, the information about the external electronic devices may further include network signal strength information for each external electronic device.

In an embodiment, the device list may include at least one of a sink device list and a source device list, and an external device list. The sink device list may be a list including information about an electronic device that may become a sink device. The source device list may be a list including information about an electronic device that may become a source device.

In an embodiment, at least one of the sink device list and the source device list may include information about the electronic device received the request for external signal sharing, i.e., identification information including a device name, a model name, a unique identification number, etc. of an electronic device received an external signal sharing function.

For example, in an embodiment, the response to receiving the request for external signal sharing, the first electronic device 100 may output all of the external device list, the sink device list, and the source device list via one screen. In an embodiment, at least one of the sink device list and the source device list may include identification information of the first electronic device 100. The identification information of the first electronic device 100 may be information such as a device name, a model name, or a unique identification number, which is used to identify the first electronic device 100.

In an embodiment, a user of the first electronic device 100 may select each of an external device, a sink device, and a source device from the device list output via the screen of the first electronic device 100. The user may select the first electronic device 100 from at least one of the sink device list and the source device list. For example, when the user selects the first electronic device 100 from the source device list, the first electronic device 100 may identify that the first electronic device 100 is selected as a source device. Also, when the user selects the second electronic device 200 from the sink device list, the first electronic device 100 may identify that the second electronic device 200 is a sink device. Also, the user may select one electronic device from the external device list, and the first electronic device 100 may identify that the electronic device the user selected from external device list is an external device to provide an image signal to be transmitted from the source device to the sink device.

Alternatively, in an embodiment, in response to receiving the request for external signal sharing, before the electronic device generates and outputs the device list, the electronic device may first identify whether the electronic device received the request for external signal sharing is a sink device or a source device.

For example, when the first electronic device 100 receives the request for external signal sharing, the first electronic device 100 may output, via a display, a user interface screen for inquiring whether the first electronic device 100 is to be selected as a source device or a sink device.

In an embodiment, according to a selection by the user, the electronic device may identify whether the electronic device is a source device or a sink device. For example, based on that the user interface screen for inquiring whether the first electronic device 100 is to be selected as a source device or a sink device is output via the display of the first electronic device 100, the user may select the first electronic device 100 as the source device, and thus, may set the electronic device as the source device.

Alternatively, in an embodiment, in response to receiving the request for external signal sharing, the electronic device may automatically identify whether the electronic device is to operate as a sink device or the electronic device is to operate as a source device. For example, when the first electronic device 100 receives the request for external signal sharing, the first electronic device 100 may identify the external device 130 connected to the first electronic device 100, and may identify that an external electronic device, e.g., the second electronic device 200, capable of performing the external signal sharing function with the first electronic device 100 is present around the first electronic device 100. When the first electronic device 100 identifies that there is no external device connected to the second electronic device 200, the first electronic device 100 may automatically identify that the first electronic device 100 is to operate as a source device and the second electronic device 200 is to operate as a sink device.

In an embodiment, in a case where the electronic device first identified whether the electronic device is a sink device or a source device before the electronic device outputs the device list, the electronic device may differently generate the device list, according to whether the electronic device is the sink device or the source device.

For example, when the electronic device is identified as the source device, the electronic device may generate and output a first device list including a sink device list and an external device list. In an embodiment, the first device list may be a device list including the sink device list and the external device list.

For example, when the first electronic device 100 received the request for external signal sharing is identified as the source device, the first electronic device 100 may generate and output the first device list including the external device list and the sink device list. The user may select the external device 130 shown in FIG. 1 as an external device to provide an image signal, from the first device list output via the display, and may select the second electronic device 200 as a sink device to receive the image signal of the external device 130 from the first electronic device 100.

For example, when the electronic device is identified as a sink device, the electronic device may generate and output a second device list including a source device list and an external device list. In an embodiment, the second device list may be a device list including the source device list and the external device list.

For example, a case is assumed in which the second electronic device 200 receives a request for external signal sharing. In an embodiment, when the second electronic device 200 is identified as a sink device, the second electronic device 200 may generate and output a second device list including an external device list and a source device list. A user may select the external device 130 shown in FIG. 1 as an external device to provide an image signal, from the second device list output by second electronic device 200 via a display, and may select the first electronic device 100 as a source device to transmit the image signal of the external device 130 to the second electronic device 200.

In an embodiment, as the second device list includes the external device list and the source device list, a mapping relation between an external device and a source device connected to the external device may be displayed in the list.

In an embodiment, the electronic device received the request for external signal sharing may transmit a query signal for inquiring whether to execute the external signal sharing function to an external electronic device, in response to the external electronic device being selected.

For example, when the first electronic device 100 received the request for external signal sharing receives, from the user, a selection of the second electronic device 200 as an external electronic device to share an image signal, the first electronic device 100 may transmit a query signal for inquiring whether to execute the external signal sharing function to the second electronic device 200.

In an embodiment, when the second electronic device 200 receives, from the first electronic device 100, a query signal for inquiring whether to accept execution of the external signal sharing function, the second electronic device 200 may generate and output, in response to the query signal, a user interface screen as to whether to accept execution of the external signal sharing function. In response to the user interface screen as to whether to accept execution of the external signal sharing function being output via the display of the second electronic device 200, a user of the second electronic device 200 may select whether to accept execution of the external signal sharing function. For example, when the user of the second electronic device 200 selects to accept execution of the external signal sharing function via the user interface screen as to whether to accept execution of the external signal sharing function, the second electronic device 200 may transmit an answer signal to accept execution of the external signal sharing function to the first electronic device 100.

In an embodiment, before the electronic device received the request for external signal sharing transmits a query signal to an external electronic device selected from the device list, the electronic device may first identify whether the electronic device and the external electronic device have a history of previously executing the external signal sharing function. For example, in an embodiment, when the first electronic device 100 has a history of executing the external signal sharing function, information about which external electronic device the first electronic device 100 has a history of previously executing the external signal sharing function may be stored in a memory of the first electronic device 100. In an embodiment, when the first electronic device 100 has a history of executing the external signal sharing function with the second electronic device 200, the first electronic device 100 may immediately perform the external signal sharing function, without transmitting a query signal as to whether to accept execution of the external signal sharing function to the second electronic device 200 and/or receiving an answer signal to accept execution of the external signal sharing function from the second electronic device 200.

In an embodiment, a case where the first electronic device 100 has a history of executing the external signal sharing function with the second electronic device 200 may include a case where the first electronic device 100 and the second electronic device 200 have a history of sharing each other an image signal from any external device, regardless of a type of the external device or regardless of whether the first electronic device 100 was a source device or a sink device.

In an embodiment, when the electronic device received the request for external signal sharing and the external electronic device selected from the device list have the same user account, the electronic device may immediately execute the external signal sharing function, without transmitting a query signal as to whether to accept execution of the external signal sharing function or considering whether the electronic device and the external electronic device have a history of previously executing the external signal sharing function.

For example, that a plurality of electronic devices have the same user account may mean that the plurality of electronic devices are logged into the same user account. Therefore, in a case where the plurality of electronic devices have the same user account, it may be considered that at least a preset level of security has been established between the plurality of electronic devices, and thus, in the case, the external signal sharing function may be immediately executed between the plurality of electronic devices, without a query or acceptance as to whether to accept execution of the external signal sharing function.

For example, when the first electronic device 100 and the second electronic device 200 have the same user account, the first electronic device 100 may not transmit a query signal as to whether to accept execution of the external signal sharing function to the second electronic device 200, and the external signal sharing function may be performed between the first electronic device 100 and the second electronic device 200, regardless of whether the first electronic device 100 and the second electronic device 200 have a history of previously executing the external signal sharing function.

In an embodiment, the first electronic device 100 may be connected to the external device 130 via an external device interface. In an embodiment, the first electronic device 100 may receive an image signal from the external device 130 via the external device interface. In an embodiment, the first electronic device 100 may encode the image signal received from the external device 130, and may transmit the encoded image signal to the second electronic device 200 via the communication network 150. In an embodiment, the second electronic device 200 may receive the encoded image signal from the first electronic device 100, may decode and output the encoded image signal via the display, and thus, may share the image signal of the external device 130.

In an embodiment, the first electronic device 100 may temporarily store, in the memory, the image signal received from the external device 130 and may encode and transmit the image signal only to the second electronic device 200, the present disclosure is not limited thereto, and while the first electronic device 100 transmits the image signal to the second electronic device 200, the first electronic device 100 may also output the image signal received from the external device 130 via the display of the first electronic device 100.

In an embodiment, the first electronic device 100 may output a user interface screen for inquiring whether to output the image signal of the external device 130. In an embodiment, when the user of the first electronic device 100 views the user interface screen output via the display so as to inquire whether to output the image signal of the external device, and selects to output the image signal, the first electronic device 100 may output, via the display of the first electronic device 100, the image signal received from the external device 130. In this case, as shown in FIG. 1, the first electronic device 100 and the second electronic device 200 may output, via respective displays, the same image signal provided by the external device 130.

In an embodiment, while the electronic device executes an external signal sharing function, the electronic device may receive a control signal for controlling the external device 130 from a control device. For example, while the first electronic device 100 outputs the image signal of the external device 130, the first electronic device 100 may receive, from the first control device 110, a control signal for controlling the external device 130. Equally, while the second electronic device 200 outputs the image signal of the external device 130, the second electronic device 200 may receive, from the second control device 210, a control signal for controlling the external device 130.

In an embodiment, the control signal for controlling the external device 130 may indicate a control signal for controlling an operation of the external device 130 itself. For example, the control signal for controlling the external device 130 may have various forms including a control signal for adjusting a volume of the external device 130, a control signal for adjusting various settings of the external device 130, e.g., resolution, brightness, contrast, a dynamic range, etc., a control signal for pausing reproduction of an image output from the external device 130, or a control signal for changing a language of subtitles, or the like.

In an embodiment, while the electronic device executes an external signal sharing function, when the electronic device receives a control signal for controlling the external device 130 from a control device, the electronic device may identify whether the electronic device has control authority over the external device 130.

In an embodiment, the control authority over the external device 130 may indicate authority capable of controlling the external device 130.

When it is assumed that, while a plurality of electronic devices execute an external signal sharing function and outputs an image signal from the same external device, all the plurality of electronic devices are capable of controlling the external device, for example, when an electronic device from among the electronic devices adjusts a volume of the external device 130 or pauses the image, an image or a volume output by another electronic device that shares an external signal and outputs an image may be changed or paused, resulting in a problem.

Accordingly, in an embodiment, the control authority over the external device 130 may be set in such a manner that only one electronic device from among the plurality of electronic devices that perform an external signal sharing function may have the control authority.

In an embodiment, the control authority may be set in such a manner that a source device has it. As the source device is a device connected to an external device and providing an image signal of the external device, it may be more reasonable for the source device to control the external device. However, this is merely an example, and which device has control authority may be changed, according to a user selection. For example, it may be set as a default that the source device has control authority, and the source device may provide an option function for changing which device is to have control authority, according to a user selection. The user may change a device having control authority from the source device to the sink device via a setting function of the source device.

In an embodiment, control authority may be given to an electronic device from among the first electronic device 100 and the second electronic device 200, the electronic device having first output an image signal from the external device 130 via a display. For example, when the first electronic device 100 starts outputting the image signal from the external device 130 before the second electronic device 200 does, the first electronic device 100 may be set to have control authority over the external device 130.

In an embodiment, an electronic device without control authority may be transferred the control authority from an electronic device that has the control authority. For example, when the second electronic device 200 receives a control signal from the second control device 210 while the first electronic device 100 has control authority over the external device 130, the second electronic device 200 may transmit a control authority transfer request signal to the first electronic device 100 that has the control authority.

In an embodiment, when the first electronic device 100 receives the control authority transfer request signal from the second electronic device 200, the first electronic device 100 may output, in response thereto, a user interface screen for receiving a selection as to whether to transfer control authority. In an embodiment, in response to the first electronic device 100 having output the user interface screen for receiving a selection as to whether to transfer control authority, when a transfer of control authority is selected by a user of the first electronic device 100, the first electronic device 100 may transmit a control authority transfer accept signal to the second electronic device 200.

In an embodiment, in response to the control authority transfer accept signal being received from the first electronic device 100, the second electronic device 200 may have control authority over the external device 130.

In an embodiment, when an electronic device having control authority receives a control signal from a control device, the electronic device may determine whether to directly perform an operation according to the control signal. In an embodiment, when the electronic device determines that it is possible to perform the operation according to the control signal, the electronic device may directly perform the operation according to the control signal.

For example, while the second electronic device 200 has control authority over the external device 130, when the second electronic device 200 receives a control signal with respect to the external device 130 from the second control device 210, the second electronic device 200 may determine whether it is possible for the second electronic device 200 to autonomously perform an operation according to the control signal. For example, when the control signal with respect to the external device 130 is a control signal with respect to volume adjustment, the second electronic device 200 may identify that the second electronic device 200 is also able to perform a volume adjustment function, and may determine that the second electronic device 200 is able to autonomously perform an operation according to the control signal. In an embodiment, in response to the second electronic device 200 having received the control signal with respect to the external device 130, the second electronic device 200 may perform an operation of adjusting a volume of the second electronic device 200.

In an embodiment, when it is not possible for an electronic device to perform an operation according to a control signal, the electronic device transmits the control signal to the external device 130 so as to allow the external device 130 to operate according to the control signal.

For example, in a case where the second electronic device 200 having control authority receives a control signal with respect to the external device 130 from the second control device 210 but it is not possible for the second electronic device 200 to directly perform an operation according to the control signal with respect to the external device 130 When a control signal transmitted from the first control device 110 and/or the second control device 210 is a first control signal, the second electronic device 200 may generate a second control signal corresponding to the first control signal, in response to the first control signal being received. In an embodiment, the second control signal corresponding to the first control signal may be a control signal including control code information corresponding to the external device 130.

For example, when the first control signal is a control signal with respect to pausing an image, the second electronic device 200 may determine whether it is possible for the second electronic device 200 to perform a function of pausing an image signal from the external device 130, and when it is not possible for the second electronic device 200 to perform the function of pausing an image signal, the second electronic device 200 may generate the second control signal corresponding to the first control signal, based on the control code information of the external device 130.

In an embodiment, the second electronic device 200 may transmit the second control signal to at least one of the second control device 210, the first electronic device 100, and the external device 130, thereby allowing the external device 130 to be controlled according to the second control signal

In an embodiment, a case is assumed in which the second electronic device 200 has control authority, and a user of the first electronic device 100 transmits, by using the first control device 110, a control signal with respect to the external device 130. In an embodiment, as the first electronic device 100 does not have control authority, the first electronic device 100 may transmit a control authority transfer request signal to the second electronic device 200. In an embodiment, when the second electronic device 200 does not transmit a control authority transfer accept signal with respect to the control authority transfer request signal from the first electronic device 100, the first electronic device 100 does not have control authority over the external device 130. That is, although the first electronic device 100 is a source device, the first electronic device 100 may not have the control authority over the external device 130.

However, as an external signal sharing function is performed in a manner that a source device receives an image signal from the external device 130 and transmits the image signal to a sink device, in a case where the source device is not transferred the control authority from the sink device even when the source device requested for the sink device to be transferred the control authority, a user of the source device may think that it is an unreasonable situation.

Therefore, in an embodiment, in a case where the source device is not able to receive the control authority transfer accept signal from the sink device even when the source device has transmitted the control authority transfer request signal to the sink device, the control authority may be forcibly transferred from the sink device.

In an embodiment, in response to the first electronic device 100 not having received the control authority transfer accept signal from the second electronic device 200, the first electronic device 100 may output a control authority forcible transfer user interface screen via the display. In an embodiment, the control authority forcible transfer user interface screen may be a user interface screen for forcibly transferring control authority from a sink device to a source device.

In an embodiment, in response to the control authority forcible transfer user interface screen being output, when the user of the first electronic device 100 selects control authority forcible transfer, the first electronic device 100 may be forcibly transferred control authority over the external device 130 from the second electronic device 200.

In an embodiment, in response to a first control signal being received from the first control device 110, the first electronic device 100 having been transferred the control authority may identify whether it is possible for the first electronic device 100 to perform an operation according to a control signal. In an embodiment, when it is possible for the first electronic device 100 to perform an operation according to the first control signal, the first electronic device 100 may perform the operation according to the first control signal. In an embodiment, when it is not possible for the first electronic device 100 to perform the operation according to the first control signal, the first electronic device 100 may generate a second control signal corresponding to the first control signal, and may transmit the second control signal to at least one of the first control device 110 or the external device 130.

In this manner, according to an embodiment, an electronic device may share an image signal from an external device with an external electronic device.

According to an embodiment, when the electronic device receives a request for external signal sharing, the electronic device performs an operation of outputting a device list including the external device and the external electronic device, and sharing an image signal of the external device selected from the device list with the external electronic device selected from the device list, so that a user may easily and conveniently use the external signal sharing function.

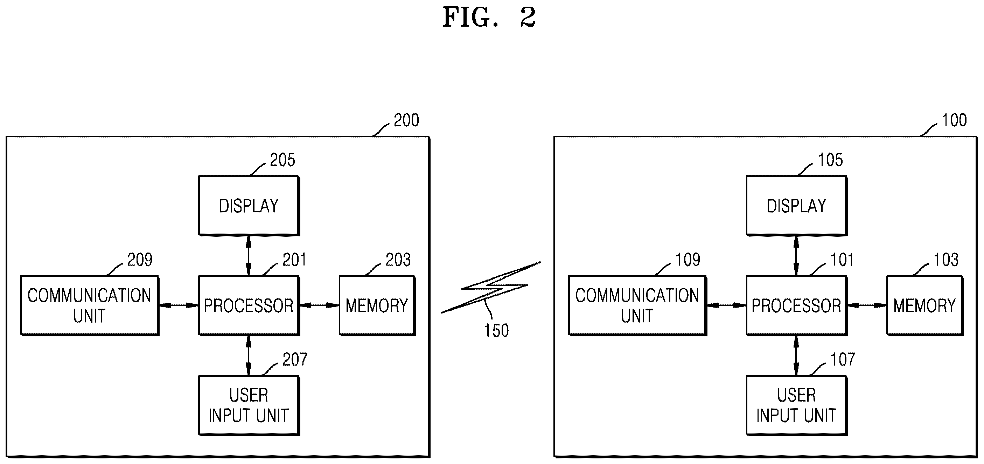

FIG. 2 illustrates block diagrams of the first electronic device 100 and the second electronic device 200, according to an embodiment.

Referring to FIG. 2, the first electronic device 100 and the second electronic device 200 may share an image signal of the external device 130 via the communication network 150.

As described above, the first electronic device 100 and the second electronic device 200 may be collectively referred to as an electronic device.

In an embodiment, the first electronic device 100 may include a processor 101, a memory 103, a display 105, a user input unit 107 and a communication unit 109.

In an embodiment, the second electronic device 200 may include a processor 201, a memory 203, a display 205, a user input unit 207 and a communication unit 209.

As described above, the first electronic device 100 and the second electronic device 200 are all image display devices, and may perform the same operation excluding when they perform a unique operation a source device or a sink device performs. In this regard, the block diagrams of the first electronic device 100 and the second electronic device 200 are described together.

According to an embodiment, the processor 101 or 201 may perform functions of controlling an overall operation of the electronic device and signal flow between internal elements of the electronic device, and processing data.

In an embodiment, the processor 101 or 201 may execute one or more instructions stored in the memory 103 or 203 to control the electronic device to operate.

In an embodiment, the processor 101 or 201 may include single core, dual core, triple core, quad core, and multiple cores thereof.

In an embodiment, the processor 101 or 201 may be one or more processors. For example, the processor 101 or 201 may include a plurality of processors. In this case, the processor 101 or 201 may be implemented as a main processor and a sub processor.

Also, the processor 101 or 201 may include at least one of a central processing unit (CPU), a graphics processing unit (GPU), and a video processing unit (VPU). Alternatively, in an embodiment, the processor 101 or 201 may be implemented in the form of a system on chip (SoC) integrating at least one of CPU, GPU, and VPU. Alternatively, in an embodiment, the processor 101 or 201 may further include a neural processing unit (NPU).

In an embodiment, the at least one processor 101 or 201 may execute the one or more instructions to output a device list via the display 105 or 205, in response to receiving a request for external signal sharing.

In an embodiment, the at least one processor 101 or 201 may execute the one or more instructions to generate the device list including information about one or more external electronic devices that use the same local network as the electronic device.

In an embodiment, the at least one processor 101 or 201 may execute the one or more instructions to generate the device list including information about one or more external electronic devices that have the same user account as the electronic device.

In an embodiment, the at least one processor 101 or 201 may execute the one or more instructions to receive, via the user input unit 107 or 207, a selection of an external device to provide an image signal and an external electronic device to share the image signal by transmitting or receiving the image signal, from the device list, and share the image signal of the selected external device with the external electronic device via the communication unit 109 or 209.

In an embodiment, that the plurality of electronic devices share the image signal of the external device may mean that the electronic device transmits an image signal of the external device to the external electronic device or receives an image signal of the external device from the external electronic device.

In an embodiment, the at least one processor 101 or 201 may execute the one or more instructions to identify whether the electronic device is a source device or a sink device.

In an embodiment, the at least one processor 101 or 201 may execute the one or more instructions to identify whether the electronic device is a source device or a sink device, in response to receiving, via the user input unit 107 or 207, a selection of identification information of the electronic device from one of a sink device list and a source device list included in the device list.

In an embodiment, the at least one processor 101 or 201 may execute the one or more instructions to output a first device list including a sink device list and an external device list, in response to the electronic device being selected as a source device.

In an embodiment, the at least one processor 101 or 201 may execute the one or more instructions to output a second device list including a source device list and an external device list, in response to the electronic device being selected as a sink device.

In an embodiment, the at least one processor 101 or 201 may execute the one or more instructions to transmit a query signal as to whether to accept external signal sharing to an external electronic device, and in response to receiving, in response to the query signal, an answer signal to accept execution of the external signal sharing function from the external electronic device, transmit an image signal of an external device to the external electronic device or receive the image signal of the external device from the external electronic device, thereby sharing the image signal of the external device.

In an embodiment, the at least one processor 101 or 201 may execute the one or more instructions to output a user interface screen for inquiring whether to output the image signal of the external device, in response to receiving, from the external electronic device, the query signal as to accept execution of the external signal sharing function, and share the image signal of the external device with the external electronic device, in response to an output of the image signal of the external device being selected via the user input unit 107 or 207 in response to the user interface screen being output.

In an embodiment, the at least one processor 101 or 201 may execute the one or more instructions to determine whether the electronic device and the external electronic device have a history of executing the external signal sharing function.

In an embodiment, when the electronic device and the external electronic device have the history of executing the external signal sharing function, the at least one processor 101 or 201 may execute the one or more instructions to share the image signal of the external device with the external electronic device, without transmitting the query signal and receiving the answer signal.

In an embodiment, the at least one processor 101 or 201 may execute the one or more instructions to identify whether the electronic device has control authority over the external device, in response to a first control signal being received from a control device.

In an embodiment, when the electronic device does not have the control authority, the at least one processor 101 or 201 may execute the one or more instructions to have the control authority by requesting the external electronic device to transfer the control authority and receiving the control authority from the external electronic device.

In an embodiment, the at least one processor 101 or 201 may execute the one or more instructions to identify whether the electronic device is able to perform an operation according to the first control signal, in response to the electronic device having the control authority over the external device.

In an embodiment, when the electronic device is able to perform the operation according to the first control signal, the at least one processor 101 or 201 may execute the one or more instructions to perform the operation according to the first control signal.

In an embodiment, when the electronic device is not able to perform the operation according to the first control signal, the at least one processor 101 or 201 may execute the one or more instructions to generate a second control signal that corresponds to the first control signal and includes control code information corresponding to the external device.

In an embodiment, when the electronic device is a source device, i.e., when the first electronic device 100 does not have control authority and requests the second electronic device 200 for transfer of the control authority but is rejected, the at least one processor 101 or 201 may execute the one or more instructions to output a control authority forcible transfer interface menu via the display 105, and be forcibly transferred control authority from the external electronic device, in response to control authority forcible transfer being selected via the user input unit 107 in response to the control authority forcible transfer interface menu being output.

According to an embodiment, the memory 103 or 203 may store the one or more instructions. The memory 103 or 203 may store at least one program executable by the processor 101 or 201. Also, the memory 103 or 203 may store data input to the electronic device or output from the electronic device.

The memory 103 or 203 may include at least one type of storage medium from among flash memory, a hard disk, a multimedia card micro, a memory card (e.g., a secure digital (SD) or extreme digital (XD) memory card), random access memory (RAM), static random access memory (SRAM), read-only memory (ROM), electrically erasable programmable read-only memory (EEPROM), programmable read-only memory (PROM), magnetic memory, a magnetic disk, and an optical disc.

In an embodiment, the memory 103 or 203 may store one or more instructions for executing an external signal sharing function.

In an embodiment, the memory 103 or 203 may store the one or more instructions for generating a device list, in response to receiving a request for external signal sharing.

In an embodiment, the memory 103 or 203 may store the one or more instructions for generating the device list including information about one or more external electronic devices that use the same local network as the electronic device.

In an embodiment, the memory 103 or 203 may store the one or more instructions for generating the device list including network signal strength information for each external electronic device.

In an embodiment, the memory 103 or 203 may store the one or more instructions for generating the device list including information about one or more external electronic devices that have the same user account as the electronic device

In an embodiment, the memory 103 or 203 may store the one or more instructions for identifying whether the electronic device is a source device or a sink device.

In an embodiment, the memory 103 or 203 may store the one or more instructions for identifying whether the electronic device is a source device or a sink device, in response to receiving a selection of identification information of the electronic device from one of a sink device list and a source device list.

In an embodiment, the memory 103 or 203 may store the one or more instructions for outputting a first device list including a sink device list and an external device list, in response to the electronic device being selected as a source device.

In an embodiment, the memory 103 or 203 may store the one or more instructions for outputting a second device list including a source device list and an external device list, in response to the electronic device being selected as a sink device.

In an embodiment, the memory 103 or 203 may store the one or more instructions for transmitting a query signal as to whether to accept external signal sharing to an external electronic device.

In an embodiment, the memory 103 or 203 may store the one or more instructions for sharing an image signal of an external device with the external electronic device, in response to receiving, in response to the query signal, an answer signal to accept execution of the external signal sharing function from the external electronic device.

In an embodiment, the memory 103 or 203 may store information about a history of executing the external signal sharing function previously performed between the electronic device and the external electronic device.

In an embodiment, the memory 103 or 203 may store the one or more instructions for identifying whether the electronic device has control authority over an external device, in response to a first control signal being received from a control device.

In an embodiment, the memory 103 or 203 may store the one or more instructions for identifying which electronic device among the external electronic device and an electronic device first output an image signal of the external device via a display.

In an embodiment, the memory 103 or 203 may store the one or more instructions for transmitting a control authority transfer request signal to the external electronic device, and receiving a control authority transfer accept signal from the external electronic device, in response to the control authority transfer request signal.

In an embodiment, the memory 103 or 203 may store the one or more instructions for identifying whether the electronic device is able to perform an operation according to the first control signal, in response to the electronic device having the control authority over the external device.

In an embodiment, the memory 103 or 203 may store the one or more instructions for performing the operation according to the first control signal, when the electronic device is able to perform the operation according to the first control signal.

In an embodiment, the memory 103 or 203 may store control code information of an external electronic device or an external device. The control code information is information for controlling the external electronic device or the external device, and may include information about each key of a remote control device dedicated for the external electronic device or the external device, and waveform information about a control signal which occurs based on each key being selected. In an embodiment, the memory 103 or 203 may store identification information of the external electronic device and the external device, and control code information of each of a plurality of external electronic devices and each of a plurality of external devices. The control code information of each of the plurality of external electronic devices and each of the plurality of external devices may be pre-stored in the memory 103 or 203 by the manufacturer of the electronic device or may be stored by being received from an external server, etc.

In an embodiment, the memory 103 or 203 may store the one or more instructions for, when the electronic device is not able to perform the operation according to the first control signal, generating a second control signal that corresponds to the first control signal and includes the control code information corresponding to the external device, and transmitting the second control signal to one of the control device, the external electronic device, and the external device.

In an embodiment, when the electronic device is a source device, i.e., the memory 103 of the first electronic device 100 may store the one or more instructions for outputting a user interface menu for inquiring whether to output, via the electronic device, an image signal of the external device which is received from the external device.

In an embodiment, when the electronic device is a source device, i.e., the memory 103 of the first electronic device 100 may store the one or more instructions for outputting the image signal of the external device via the display, in response to an output of the image signal of the external device being selected in response to the output of the user interface menu.

In an embodiment, when the electronic device is a source device, i.e., the memory 103 of the first electronic device 100 may store the one or more instructions for outputting a control authority forcible transfer interface menu via the display, in response to a control authority transfer accept signal not being received from the electronic device in response to a control authority transfer request signal.

In an embodiment, when the electronic device is a source device, i.e., the memory 103 of the first electronic device 100 may store the one or more instructions for being transferred control authority from the external electronic device, in response to control authority forcible transfer being selected by a user in response to the output of the control authority forcible transfer interface menu.

In an embodiment, the memory 103 of the first electronic device 100 that is a source device may store an image signal received from the external device 130. The image signal received from the external device 130 may be temporarily stored in the memory 103 and then may be encoded and transmitted to the second electronic device 200.

In addition thereto or separately therefrom, in an embodiment, the image signal received from the external device 130 may be stored in the memory 103, and under the control of the processor 201, may be processed as image data to be displayed by the display 105 and may be output via the display 105. The display 105 or 205 according to an embodiment may display, on a screen, image signals provided by content providers. The display 105 or 205 may output a broadcasting program received in real time to the screen or may output a program of a video on demand (VOD) service to the screen, the program received by being streamed or downloaded.

In an embodiment, when the display 105 or 205 is implemented as a touch screen, the display 105 may be used not only as an output device but also used as an input device such as a user interface. For example, the display 105 may include at least one of a liquid crystal display, a thin film transistor-liquid crystal display, a light-emitting diode display, an organic light-emitting diode display, a flexible display, a three-dimensional (3D) display, or an electrophoretic display. According to an implementation form of the display 105, the display 105 may include at least two displays.

In an embodiment, the display 105 or 205 may output a user interface screen for receiving a selection as to whether the electronic device is a source device or a sink device.

In an embodiment, the display 105 or 205 may output a device list, in response to the electronic device receiving a request for external signal sharing. In an embodiment, the device list may include at least one of a sink device list and a source device list, and an external device list.

In an embodiment, the display 105 or 205 may output a first device list including a sink device list and an external device list, in response to the electronic device being selected as a source device.

In an embodiment, the display 105 or 205 may output a second device list including a source device list and an external device list, in response to the electronic device being selected as a sink device. In an embodiment, the second device list may be a list in which external devices included in the external device list and source devices connected via an external device interface are mapped to each other.

In an embodiment, when the electronic device receives a query signal as to whether to accept external signal sharing, the display 105 or 205 may output a user interface screen as to whether to accept execution of the external signal sharing function.

In an embodiment, the display 105 or 205 may output a user interface screen for receiving a selection as to whether to transfer control authority in response to the electronic device receiving a control authority transfer request signal from an external electronic device.

In an embodiment, the display 105 or 205 may output an image signal from the external device 130.

In an embodiment, when the electronic device is a source device, i.e., the display 105 of the first electronic device 100 may output a user interface menu for inquiring whether to output, via the first electronic device 100, the image signal of the external device 130 which is received from the external device 130.

In an embodiment, when the electronic device is a source device, i.e., the display 105 of the first electronic device 100 may output the image signal of the external device 130, in response to an output of the image signal of the external device 130 being selected in response to the output of the user interface menu.

In an embodiment, when the electronic device is a source device, i.e., the display 105 of the first electronic device 100 may output a control authority forcible transfer interface screen, in response to a control authority transfer accept signal not received from the external electronic device in response to the control authority transfer request signal.

According to an embodiment, the user input unit 107 or 207 may receive a user input for controlling the first electronic device 100 and the second electronic device 200. The input unit 107 or 207 may include a user input device with various types including a touch panel for detecting a touch of the user, a button for receiving a push manipulation of the user, a wheel for receiving a rotation manipulation of the user, a keyboard, a dome switch, a microphone for voice recognition, a motion detection sensor for sensing a motion, or the like, but the present disclosure is not limited thereto. In an embodiment, the user input unit 107 or 207 may receive a user input for receiving information selected by a user in response to the first electronic device 100 and the second electronic device 200 outputting various types of user interface screens.

In an embodiment, when the electronic device outputs a device list via the display 105 or 205, in response to receiving the request for external signal sharing, the electronic device may receive, via the user input unit 107 or 207 from the user, a selection of an external device to provide an image signal and an external electronic device to share the image signal from

In an embodiment, when the electronic device receives, from the external electronic device, a query signal as to whether to accept execution of the external signal sharing function, and outputs the query signal to a user interface screen via the display 105 or 205, the electronic device may receive, via the user input unit 107 or 207 from the user, a selection as to whether to accept execution of the external signal sharing function.

In an embodiment, the user input unit 107 or 207 may receive, from the user, a selection as to whether the electronic device is a source device or a sink device.

In an embodiment, when the electronic device receives a control authority transfer request signal from the external electronic device and outputs, via the display 105 or 205, a user interface screen for inquiring whether to accept control authority transfer, the electronic device may receive, from the user via the user input unit 107 or 207, a user selection as to whether to accept control authority transfer.

In an embodiment, when the electronic device is a source device, i.e., when the display 105 of the first electronic device 100 outputs a user interface menu for inquiring whether to output, via the electronic device, an image signal of the external device 130 which is received from the external device 130, the first electronic device 100 may receive, from the user via the user input unit 107, a selection as to whether to output the image signal of the external device 130 via the display 105 of the first electronic device 100.

In an embodiment, when the electronic device is a source device, i.e., when the first electronic device 100 does not have control authority and requests the second electronic device 200 for transfer of the control authority but is rejected, the first electronic device 100 may output a control authority forcible transfer interface screen via the display 105. In an embodiment, the user may select, via the user input unit 107, as to whether to forcibly transfer control authority.

In an embodiment, the first electronic device 100 may perform image processing including decoding, rendering, scaling, etc., on an image signal of an external device which is received from the external device and is stored in the memory 103, and may allow the image-processed image to be output via the display 105.

According to an embodiment, the communication unit 109 or 209 may perform communication with the at least one control device 110 or 210 via a wired or wireless communication network.

In an embodiment, the communication units 109 and 209 of the first electronic device 100 and the second electronic device 200 may respectively perform communications with the first control device 110 and the second control device 210 by using infrared (IR) communication, radio frequency (RF) communication, Wi-Fi communication, or Bluetooth low energy (BLE) communication. The communication units 109 and 209 of the first electronic device 100 and the second electronic device 200 may receive control signals from the first control device 110 and the second control device 210 via communications with the first control device 110 and the second control device 210.

In an embodiment, the control signal received from the first control device 110 may include at least one of a control signal for controlling the first electronic device 100 and a control signal for controlling the external device 130. In an embodiment, the control signal received from the second control device 210 may include at least one of a control signal for controlling the second electronic device 200 and a control signal for controlling the external device 130.

Also, in an embodiment, the communication units 109 and 209 of the first electronic device 100 and the second electronic device 200 may communicate with each other via the communication network 150. In an embodiment, the communication network 150 may be a wired or wireless communication network. According to an embodiment, the communication unit 109 or 209 may transmit or receive signals by performing communication between electronic devices.

In an embodiment, the communication unit 109 of the first electronic device 100 and the communication unit 209 of the second electronic device 200 may include at least one communication module capable of performing wireless communication. In an embodiment, the communication unit 109 or 209 may include at least one of a wireless LAN module, a Bluetooth module, and a wired Ethernet, according to performance and structure of the electronic device.

In an embodiment, the communication unit 109 or 209 may include at least one short range communication module configured to perform communication according to a communication standard including BLE, near-field communication (NFC)/radio frequency identification (RFID), Wi-Fi Direct (WFD), ultra-wideband (UWB), ZigBee, or the like.

Also, the communication unit 109 or 209 may further include a long range communication module configured to perform communication with a server configured to support long range communication according to a long range communication standard. In detail, the communication unit 109 or 209 may include the long range communication module configured to perform communication via a network for Internet communication. For example, the communication unit 109 or 209 may include the long range communication module configured to perform communication via a communication network that follows a communication standard such as 3^{rd}-generation (3G), 4^{th}-generation (4G) and/or 5^{th}-generation (5G).

Also, the first electronic device 100 and the second electronic device 200 may communicate with each other by wire. To this end, the communication unit 109 or 209 may include at least one port so as to be connected between electronic devices via a wired cable. The communication units 109 and 209 may be connected to each other by wire via at least one port and may perform communication.

In an embodiment, the first electronic device 100 as a source device may encode an image signal received from the external device 130, and may transmit the encoded image signal to the second electronic device 200 via the communication unit 109.

In an embodiment, the communication unit 209 of the second electronic device 200 may receive the encoded image signal from the communication unit 109 of the first electronic device 100. The second electronic device 200 may decode the encoded image signal and may output the image signal.

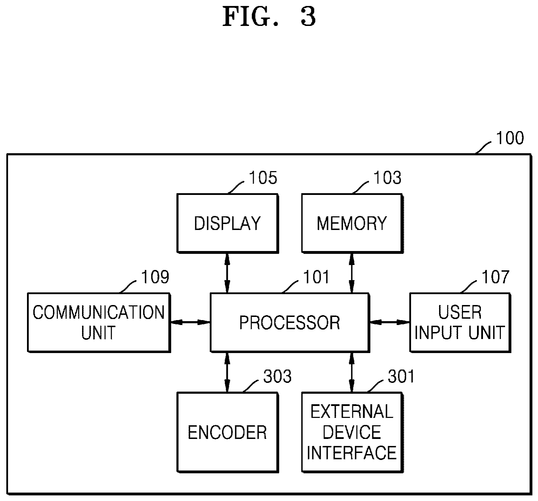

FIG. 3 is a block diagram of the first electronic device 100 according to an embodiment.

Referring to FIG. 3, the first electronic device 100 shown in FIG. 3 may be an example of the first electronic device 100 shown in FIG. 2.

In an embodiment, the first electronic device 100 may further include an encoder 303 and an external device interface 301, in addition to the processor 101, the memory 103, the display 105, the user input unit 107 and the communication unit 109.

In an embodiment, each element included in the first electronic device 100 may be a module. In an embodiment, the module may refer to a functional and structural combination of hardware and software for operating the hardware so as to perform the technical concept of the present disclosure. For example, the module may refer to a logical unit of preset code and hardware resources required to execute the preset code, and does not necessarily indicate physically connected code or a single type of hardware.

In an embodiment, the first electronic device 100 may be connected to the external device 130 via the external device interface 301 and may receive an image signal of the external device 130.

In an embodiment, the external device interface 301 may receive a video, audio, additional information, etc., from the external device 130, an external server, or the like. The external device interface 301 may include one of a HDMI port, a component jack, a PC port, and a USB port.

Hereinafter, it is now described that the external device interface 301 according to an embodiment is a HDMI port, but the present disclosure is not limited thereto.

A HDMI refers to a scheme of simultaneously transmitting, via one cable, an audio signal and a video signal which are in a digital format. The cable connected to the HDMI port refers to a non-compression digital type cable for transmitting an image signal without compression to the first electronic device 100. Connectors are arranged at both ends of the HDMI cable and are respectively connected to ports of the first electronic device 100 and the external device 130, so that signal transmission using HDMI may be performed between the first electronic device 100 and the external device 130.

The external device interface 301 may include a communication module capable of performing data transmission/reception with the external device 130 via a network that follows a HDMI communication standard. The external device interface 301 may receive device information from the external device 130. In an embodiment, the external device interface 301 may receive identification information of the external device 130 from the external device 130 via a CEC channel. In an embodiment, the external device interface 301 may transmit an initialization signal to the external device 130, and may receive an extended display identification data (EDID) request command from the external device 130 via a DDC channel. In an embodiment, the external device interface 301 may receive an image signal from the external device 130 via a TMDS channel.

According to an embodiment, the encoder 303 may encode an image signal that is received from the external device 130 via the external device interface 301. The image signal may include a video signal and an audio signal.

Multimedia data including video has a large volume and thus requires a wide bandwidth for transmission. For transmission of large-volume data, it is essential to encode an image by using a compression coding technique.

In an embodiment, the encoder 303 may compress a video signal and an audio signal. In an embodiment, the encoder 303 may compress an image via various compression format schemes. For example, the encoder 303 may compress a still image by using a JPEG compression scheme, and may compress a moving picture by using a compression scheme including MPEG2, H.264, high efficiency video coding (HEVC), or the like. Also, the encoder 303 may compress an audio signal included in the image signal from the external device 130. For example, the encoder 303 may compress audio by using a compression scheme including advanced audio coding low complexity (AAC-LC), or the like.

In an embodiment, video data and audio data which are encoded by the encoder 303 may be generated with preset formats defined by each video codec and audio codec and may be transmitted to the second electronic device 200 via the communication unit 109.

In an embodiment, the communication unit 109 of the second electronic device 200 may receive a compressed image signal from the first electronic device 100, may decode the compressed image signal, and thus, may output image data.

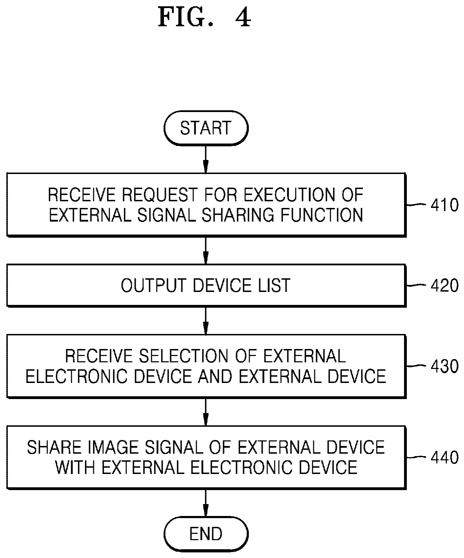

FIG. 4 is a flowchart illustrating an operation method of an electronic device, according to an embodiment.

Referring to FIG. 4, the electronic device may receive a request for external signal sharing (operation 410).

In an embodiment, a user may transmit, by using a control device, a control signal for requesting external signal sharing to the electronic device. For example, a user of the first electronic device 100 may transmit a control signal for requesting external signal sharing to the first electronic device 100, by using the first control device 110. Alternatively, a user of the second electronic device 200 may transmit a control signal for requesting external signal sharing to the second electronic device 200, by using the second control device 210.

In an embodiment, in response to receiving the request for external signal sharing, the electronic device may output a device list (operation 420).

In an embodiment, in response to receiving the request for external signal sharing, the electronic device may scan an external electronic device and an external device to perform the external signal sharing function with the electronic device.

In an embodiment, when the external electronic device and the external device are scanned, the electronic device may generate a device list including information about the scanned external electronic device and the scanned external device, and may output the device list.

In an embodiment, the electronic device may receive a selection of an external electronic device and an external device from the device list (operation 430).

In an embodiment, in response to the device list being output via a display of the electronic device, a user may select, from the device list by using an input unit, an external electronic device and an external device to perform the external signal sharing function with the electronic device.

In an embodiment, the electronic device may share an image signal of the external device with the external electronic device (operation 440).

In an embodiment, the electronic device may share an image signal from the selected external device with the external electronic device.

In an embodiment, in a case where the electronic device is a source device and the external electronic device is a sink device, the electronic device may receive an image signal from the external device, and may compress and transmit it to the external electronic device, thereby sharing the image signal with the external electronic device.

In an embodiment, in a case where the electronic device is a sink device and the external electronic device is a source device, the external electronic device connected to an external device may receive an image signal from the external device, may perform compression processing on the received image signal, and may transmit it to the electronic device. The electronic device may decode the compressed image signal received from the external electronic device and may output the image signal, thereby sharing the image signal of the external device with external electronic device.

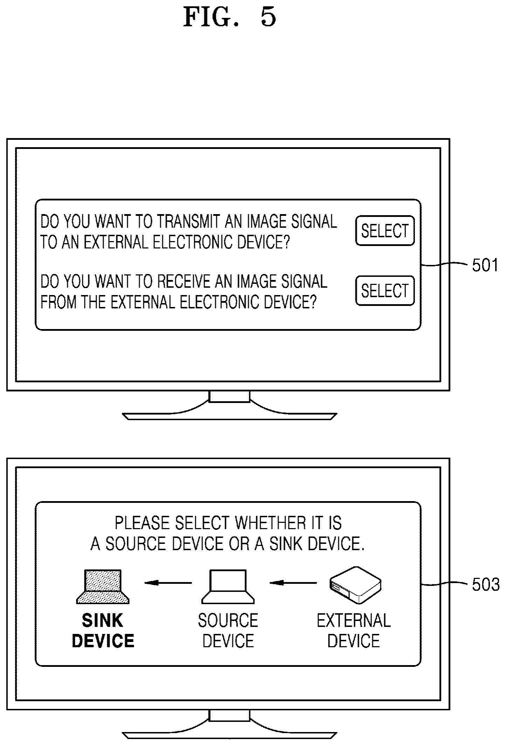

FIG. 5 is a diagram illustrating a user interface screen for receiving a selection as to whether an electronic device is a source device or a sink device, according to an embodiment.

In an embodiment, in response to receiving a request for external signal sharing, the electronic device may identify whether the electronic device is a source device or a sink device.

In an embodiment, the electronic device may receive, from a user, a selection as to whether the electronic device is the source device or the sink device.

In an embodiment, in order to receive, from the user, a selection as to whether the electronic device is the source device or the sink device, the electronic device may output, via a display, a user interface screen for receiving a selection as to whether the electronic device is the source device or the sink device.

In an embodiment, the user interface screen for receiving a selection as to whether the electronic device is the source device or the sink device may include content in which the user selects whether the electronic device is to receive an image signal of an external device or the electronic device is to transmit an image signal to an external device.

In an embodiment, the electronic device may display the user interface screen for receiving a selection as to whether the electronic device is the source device or the sink device, in the form of a text window on a partial area of the display.

For example, as shown in the top of the FIG. 5, a user interface screen 501 for receiving a selection as to whether an electronic device is a source device or a sink device from a user may include text with content "Do you want to transmit an image signal to an external electronic device? Do you want to receive an image signal from the external electronic device?". A device that transmits an image signal to an external electronic device may refer to a source device, and a device that receives an image signal from the external electronic device may refer to a sink device.

The user may select whether the electronic device is a source device or a sink device by using a selection button included in the user interface screen 501 for receiving a selection as to whether the electronic device is the source device or the sink device.

When the electronic device receives a user input with respect to a 'selection' button next to the text "Do you want to transmit an image signal to an external electronic device?", the electronic device may identify that the electronic device is the source device.

When the electronic device receives a user input with respect to a 'selection' button next to the text "Do you want to receive an image signal from the external electronic device?", the electronic device may identify that the electronic device is the sink device.

Content, a size of the screen, an output position, transparency, text, and/or a shape included in the user interface screen for receiving a selection as to whether the electronic device is a source device or a sink device may be variously modified.

For example, the user interface screen for receiving a selection as to whether the electronic device is a source device or a sink device may include text with various contents. For example, the user interface screen for receiving a selection as to whether the electronic device is a source device or a sink device may include text with content "Do you want to transmit an image signal of an external device? Do you want to receive an image signal of an external device?". Here, a device that transmits an image signal of an external device may refer to a source device, and a device that receives an image signal of an external device may refer to a sink device.

Alternatively, as shown in the bottom of FIG. 5, a user interface screen 503 for receiving a selection as to whether the electronic device is a source device or a sink device may include images visualizing a source device, a sink device, and an external device.

For example, the user interface screen 503 for receiving a selection as to whether the electronic device is a source device or a sink device may include two image display device images, and an external device image that provides an image to one of the two image display device images. Also, arrows indicating the direction in which a signal moves may be displayed between two image display devices and between an image display device and an external device, respectively, to indicate from which device the signal is transmitted.

The user may intuitively and conveniently select whether the electronic device is a source device or a sink device by viewing the images and the arrows included in the user interface screen 503 for receiving a selection as to whether the electronic device is a source device or a sink device.

In an embodiment, when a user input for selecting a sink device from among the two image display device images included in the user interface screen 503 for receiving a selection as to whether the electronic device is a source device or a sink device is received, the electronic device may indicate that the sink device is selected by enlarging, bolding, or highlighting the image display device image selected by the user along with the text indicating the sink device. Also, in response to the image display device image selected by the user being the sink device, the electronic device may identify the electronic device as the sink device.

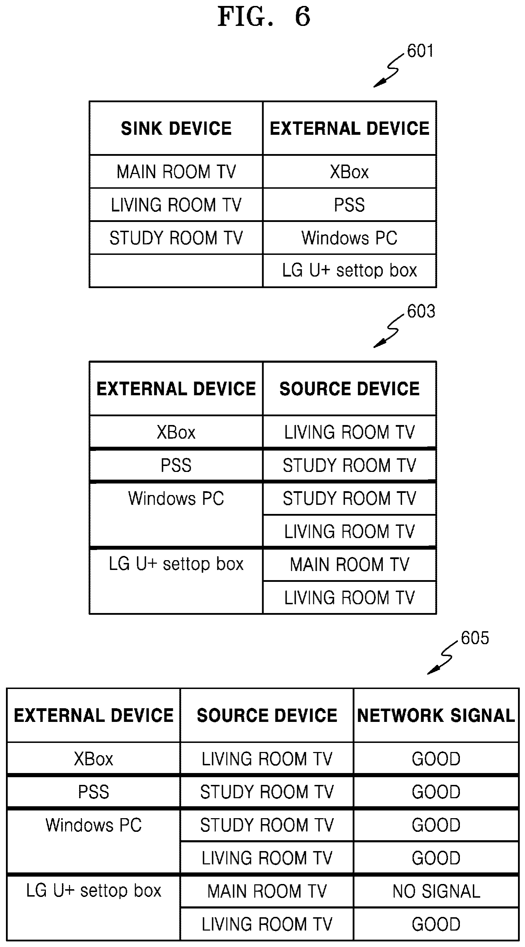

FIG. 6 is a diagram illustrating a device list according to an embodiment.

Referring to FIG. 6, the device list may include at least one of a sink device list and a source device list, and an external device list.

In an embodiment, in response to an electronic device being selected as a source device, the electronic device may output a device list including a sink device list and an external device list. The device list including the sink device list and the external device list may be referred to as a first device list.

In an embodiment, in response to an electronic device being selected as a sink device, the electronic device may output a device list including a source device list and an external device list. The device list including the source device list and the external device list may be referred to as a second device list.

In an embodiment, in response to receiving a request for external signal sharing, the electronic device may scan an external electronic device and an external device to perform the external signal sharing function with the electronic device.

In an embodiment, when the electronic device is a source device, the electronic device may scan an external electronic device that may become a sink device.

In an embodiment, when the electronic device is a sink device, the electronic device may scan an external electronic device that may become a source device.

In an embodiment, the electronic device may scan an external electronic device according to various references. The reference for scanning an external electronic device by the electronic device may be preset as a default in the electronic device, or may be configured by the user by selecting or changing the reference for scanning an external electronic device via a setting function of the electronic device.

In an embodiment, the electronic device may scan an external electronic device, based on whether it uses the same local network as the electronic device.

In an embodiment, the electronic device may scan an external electronic device that uses the same local network as the electronic device that receives the request for external signal sharing.

In an embodiment, the term "based on the same local network" may refer to a LAN-based network to which the electronic device belongs. A LAN is a network that performs information processing or communication by connecting various communication terminals or information processing terminals including host computers and workstations installed within a limited area such as a home via communication circuits using optical fibers or coaxial cables.

In an embodiment, in order to scan an external electronic device based on the same local network as the electronic device, the electronic device may scan external electronic devices that wirelessly transmit and receive Wi-Fi signals with an access point (AP) that is a Wi-Fi router installed in an area where the electronic device is located.

In an embodiment, when an external electronic device that uses the same local network as the electronic device is scanned, the electronic device may generate a device list including information about the scanned external electronic device.

In an embodiment, the electronic device may scan an external electronic device, based on the same user account as the electronic device. In an embodiment, the electronic device may scan an external electronic device having the same user account as the electronic device receiving the request for external signal sharing.

In an embodiment, a user may have a user account for using a computer system. The user account may be generated to use a particular computer system, etc., by a particular system administrator. The user account may include information about a user, i.e., a user profile. The user profile may include information necessary for the user to log into the system, such as the user's identification number, name, and password, as well as information regarding the user's resource access permissions and access restrictions.

In an embodiment, the electronic device may manage user account information with respect to the user.

In an embodiment, when the electronic device receives the request for external signal sharing from the user, the electronic device may scan whether there is an external electronic device logged in with the same user account as the electronic device.

In an embodiment, when there is an external electronic device having the same user account, the electronic device may generate a device list including information about the external electronic device having the same user account.

In an embodiment, the electronic device may scan an external electronic device that satisfies both references as to using the same local network as the electronic device and having the same user account as the electronic device.

In an embodiment, the electronic device may scan whether there is an electronic device having the same user account as the electronic device from among external electronic devices using the same local network as the electronic device having received the request for external signal sharing. In an embodiment, when an external electronic device that uses the same local network as the electronic device and simultaneously has the same user account as the electronic device is scanned, the electronic device may generate a device list including information about the scanned external electronic device.

FIG. 6 illustrates device lists output by an electronic device. Referring to FIG. 6, reference numeral 601 indicates a first device list, and reference numeral 603 indicates a second device list.

In an embodiment, the electronic device may display the device list on a partial area of the display. Information included in the device list, the size of the device list, the output position, the transparency, and/or the shape may be variously modified.

A user may view the device list output via the display and may select an external electronic device and an external device to perform an external signal sharing function with the electronic device.

In an embodiment, in response to the electronic device being selected as a source device, the electronic device may output a first device list 601 including a sink device list and an external device list.

In an embodiment, the sink device list may include identification information of the external electronic device that may become a sink device. For example, the external electronic device that may become a sink device may be an image display device capable of outputting an image via a screen. The identification information of the external electronic device may include information for identifying the external electronic device, such as a device name, a model name, a manufacturer, or a unique identification number of the image display device.

In an embodiment, the first device list 601 may include the external device list. In an embodiment, an external device may be a device capable of providing an image signal, such as a set-top box, a PC, a DVD player, a mobile phone, a game console, a home theater, an audio player, a USB, or the like. In an embodiment, the external device list may include identification information of the external device. The identification information of the external device may include information for identifying the external device, such as a device name, a model name, a manufacturer, or a unique identification number of the external device.

In response to the first device list 601 being output, a user may select a sink device to receive an image signal from the electronic device, from the sink device list included in the first device list 601. Also, the user may select an external device to provide an image signal to the electronic device, from the external device list included in the first device list 601. For example, a case is assumed in which the user selects a main room TV from the sink device list, and selects a PSS from the external device list. The PSS may be a game console that provides game content.

The electronic device may transmit a query signal for inquiring whether to execute an external signal sharing function to the main room TV selected as a sink device. In response to receiving the query signal for inquiring whether to execute an external signal sharing function from the electronic device, when the main room TV receives a selection of accepting execution of the external signal sharing function from a user of the main room TV, the main room TV may transmit an answer signal to accept execution of the external signal sharing function to the electronic device.

In this case, the electronic device may connect to the PSS and may receive, from the PSS, game content that is an image signal about a game. The electronic device may encode the image signal about the game, and may transmit the encoded image signal to the main room TV that is the sink device. The main room TV may receive the image signal about the game from the electronic device, may decode the image signal, and may output the game content via a display.

In an embodiment, a case in which the electronic device displays a second device list 603 will now be described. In an embodiment, in response to the electronic device being selected as a sink device, the electronic device may output the second device list 603 including a source device list and an external device list.

In an embodiment, the second device list 603 may include the source device list. For example, the source device list may include identification information of an external electronic device that may become a source device. For example, the external electronic device that may become the source device may be an image display device capable of outputting an image via a screen. The identification information of the external electronic device may be information for identifying the external electronic device.

In an embodiment, the second device list 603 may include the external device list. In an embodiment, the second device list 603 may be a list in which external devices included in the external device list and source devices are mapped to each other.

In order to enable external signal sharing according to an embodiment, an external device and a source device have to be connected to each other via an external device interface, or the like. Therefore, when the electronic device generates the second device list 603, the electronic device may generate a source device list by associating each external electronic device, which is mapped to and connected with a respective external device via an external device interface, with the corresponding external device included in the external device list.

For example, in a case where an external electronic device connected to Xbox is a living room TV, the second device list 603 may list Xbox in the external device list and may list the living room TV, which is the external electronic device connected to Xbox, on the same line as Xbox in the source device list so that a user may intuitively recognize that Xbox and the living room TV are connected. Equally, in a case where LG U+ set-top box from among the external devices is connected to both a main room TV and a living room TV, the second device list 603 may list LG U+ set-top box in the external device list and may list the main room TV and the living room TV, which are connected to LG U+ set-top box, in the source device list.

In response to the second device list 603 being output, the user may first select an external device from the external device list included in the second device list 603. Also, the user may select, from the source device list included in the second device list 603, an external electronic device as a source device which is connected to the external device and is to provide an image signal to the electronic device.

For example, it is assumed that the user selects Windows PC and a study room TV from the second device list 603.

The electronic device may transmit a query signal for inquiring whether to execute an external signal sharing function to the study room TV selected as a source device. In response to receiving the query signal for inquiring whether to execute an external signal sharing function from the electronic device, when the study room TV receives a selection of accepting execution of the external signal sharing function from a user of the study room TV, the study room TV may transmit an answer signal to accept execution of the external signal sharing function to the electronic device.

The electronic device may transmit, to the study room TV, a signal indicating to connect to Windows PC and receive an image signal from Windows PC. The study room TV may connect to Windows PC, based on the signal received from the electronic device, and may receive, from Windows PC, an image signal provided by Windows PC. The study room TV may encode the image signal provided by Windows PC and may transmit it to the electronic device. The electronic device may receive, from the study room TV, the image signal provided by Windows PC, and may output the image signal.

In FIG. 6, reference numeral 605 indicates a second device list in a different form. The different-form second device list 605 may further include information indicating strength of a network signal of each device, in addition to identification information such as a device name or a model name for a source device and an external device. When strength of a network signal is weak, it is difficult for an external signal sharing function to be smoothly performed. Therefore, the electronic device may add, to a device list, information about a network state of a source device or each external electronic device included in a sink device list.

For example, when the main room TV is not connected to a network or is unable to transmit or receive signals due to a network error, the electronic device may inform the user that there is no network signal for the main room TV among source devices. The user may identify that the main room TV currently has a poor network state, and may prevent in advance an external signal sharing function with the main room TV from being poorly performed, by not selecting the main room TV as a source device.

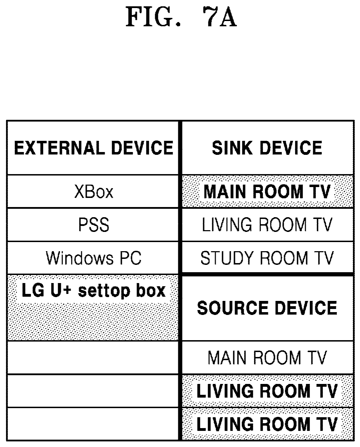

FIG. 7A is a diagram illustrating a device list according to an embodiment.

Referring to FIG. 7A, the device list may include all of an external device list, a sink device list, and a source device list.

In an embodiment, in response to receiving a request for external signal sharing, the electronic device may scan an external electronic device and an external device to perform the external signal sharing function with the electronic device.

In an embodiment, the electronic device may scan an external electronic device that satisfies at least one reference among references as to using the same local network as the electronic device and having the same user account as the electronic device.

In an embodiment, in response to receiving the request for external signal sharing, the electronic device may first generate a device list without identifying whether the electronic device is a source device or a sink device, and may output the device list.

In an embodiment, the electronic device may generate a device list including all of a source device list, a sink device list, and an external device list. Hereinafter, the device list including all of the sink device list, the source device list, and the external device list is referred to as a third device list.

In an embodiment, FIG. 7A shows the third device list.

In an embodiment, the electronic device may output the third device list via a display. In an embodiment, the electronic device may display the third device list in the form of a text window on a partial area of the display. In an embodiment, in response to the third device list being output via the display of the electronic device, a user may select each of an external device, a sink device, and a source device from the third device list.

In an embodiment, source device list/sink device list may include identification information of an external electronic device that may become source device/sink device. For example, the external electronic device that may become source device/sink device may be an image display device capable of outputting an image via a screen.

In an embodiment, at least one of the source device list and the sink device list may include identification information of the electronic device. As the electronic device has not identified in advance whether the electronic device is a source device or a sink device, the electronic device does not recognize whether the electronic device is to operate as the source device or is to operate as the sink device. Therefore, the electronic device may generate a device list in which the identification information of the electronic device is included in at least one of the source device list and the sink device list. The identification information of the electronic device may include information for identifying the electronic device, such as a device name, a model name, a manufacturer, or a unique identification number of the electronic device.

In response to the third device list being displayed, the user may select the identification information of the electronic device from one of the sink device list and the source device list.

In an embodiment, in response to the identification information of the electronic device being selected, by the user, from one of the sink device list and the source device list, the electronic device may identify whether the electronic device is the source device or the sink device.

For example, when the user selects the identification information of the electronic device from the sink device list, the electronic device may identify that the electronic device is the sink device. Alternatively, when the user selects the identification information of the electronic device from the source device list, the electronic device operates as the source device.

In an embodiment, when the user selects one of external devices in the external device list from the third device list, the electronic device may display identification information of an external electronic device to be distinguishable from identification information of other external electronic devices, the external electronic device being among identification information of external electronic devices included in the sink device list and the source device list included in the third device list, and being capable of performing an external signal sharing function with the external device selected by the user. For example, the electronic device may display the identification information of the external electronic device in a different color, a different level of boldness or size, or by highlighting it, the external electronic device capable of performing the external signal sharing function with the external device selected by the user.

For example, referring to FIG. 7A, when the user selects LG U+ set-top box as an external device from the external device list included in the third device list, the electronic device may scan an image display device connected to LG U+ set-top box. When the electronic device identifies that a living room TV and a study room TV are connected to LG U+ set-top box, the electronic device may display the living room TV and the study room TV among the source device device list included in the third device list in bolder text so as to be distinguishable from another external electronic device such as the main room TV. Also, the electronic device may identify that, among the external electronic devices included in the sink device list, the main room TV that is not directly connected to LG U+ set-top box is capable of operating as a sink device, and may display the main room TV in bolder text to be distinguishable from other external electronic devices.

After the user selects LG U+ set-top box from the external device list in the third device list, the user may easily identify, among identification information of external electronic devices included in the source device list and the sink device list, the identification information of the external electronic device capable of performing an external signal sharing function with LG U+ set-top box, and may select a source device, and the external electronic device to operate as a sink device.

However, this is merely an embodiment, and the user may first select a sink device or a source device, instead of first selecting an external device from the third device list. When the user selects the main room TV as a sink device, the electronic device may identify the living room TV and the study room TV as an external electronic device that may become a source device, and may display the living room TV and the study room TV included in the source device list to be distinguishable from other external electronic devices. Also, the electronic device may identify that the main room TV is connected to Xbox, PSS, and Windows PC via respective external device interfaces, and in response to the main room TV being selected as a sink device by the user, the electronic device may display LG U+ set-top box to be distinguishable from other external devices, wherein LG U+ set-top box is an external device that is not connected to the main room TV via an external device interface. The user may identify an external electronic device and an external device displayed to be distinguishable from other devices in the source device list and the external device list included in the third device list, and may further conveniently select a source device and an external device.

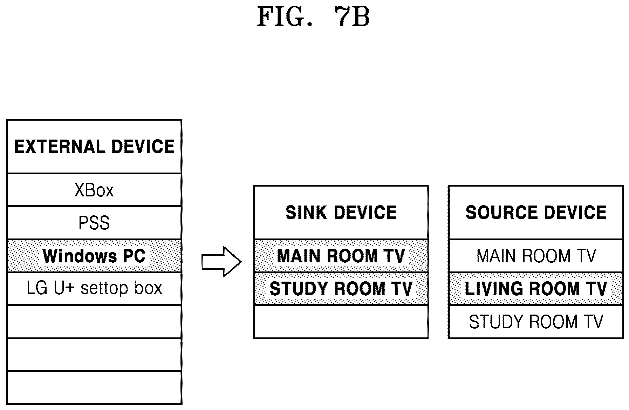

FIG. 7B is a diagram illustrating a device list according to an embodiment.

FIG. 7B shows a third device list in a form different from a third device list shown in FIG. 7A. The third device list shown in FIG. 7B does not have a form in which a source device list, a sink device list, and an external device list are all included but may have a form in which an external device list and external electronic devices are sequentially output. In an embodiment, an electronic device first outputs the external device list, and then, when a user selects one external device from the external device list, the electronic device may output a sink device list and a source device list.

In an embodiment, in response to the external device list being first output by the electronic device, the user may select one external device from among external devices included in the external device list. In an embodiment, when the user selects one of the external devices included in the external device list of the third device list, the electronic device may output, from among external electronic devices included in the sink device list and the source device list included in the third device list, identification information of an external electronic device capable of performing an external signal sharing function with the external device selected by the user, so that the identification information is distinguished from identification information of other external electronic devices.

For example, referring to FIG. 7B, when the user selects Windows PC as the external device from the external device list included in the third device list, the electronic device may scan an image display device connected to Windows PC. When the electronic device identifies that Windows PC is connected to a living room TV, the electronic device may display the living room TV in bolder text in the source device list included in the third device list so as to be distinguishable from other external electronic devices such as a main room TV and a study room TV. Also, the electronic device may identify that the main room TV and the study room TV that are from among the external electronic devices included in the sink device list and are not directly connected to Windows PC are operable as a sink device, and may display the main room TV and the study room TV in bolder text. After the user selects Windows PC from the external device list, the user may further easily select a source device and a sink device by viewing that the identification information of the external electronic device capable of performing an external signal sharing function with Windows PC is displayed distinguishably from the identification information of other external electronic devices in the source device list and the sink device list.

Although not illustrated in FIG. 7, the third device list may further include information indicating strength of a network signal of each external electronic device, in addition to the source device list and a sink device list. The user may consider the information about a network state included in the third device list, so that it may be prevented in advance that an external electronic device having a weak network signal or not having a signal is selected as a source device or a sink device.

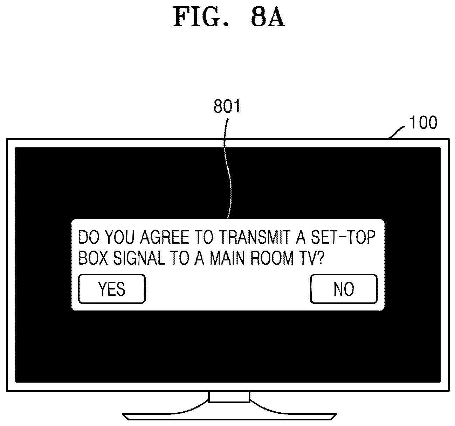

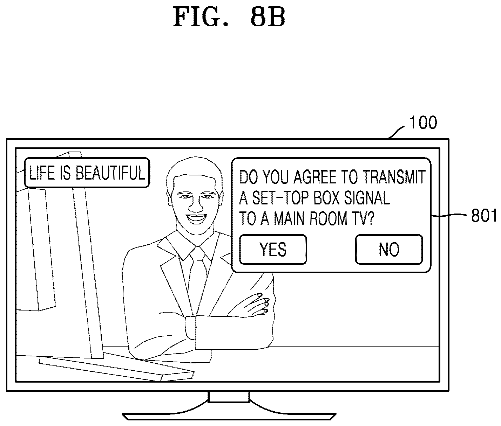

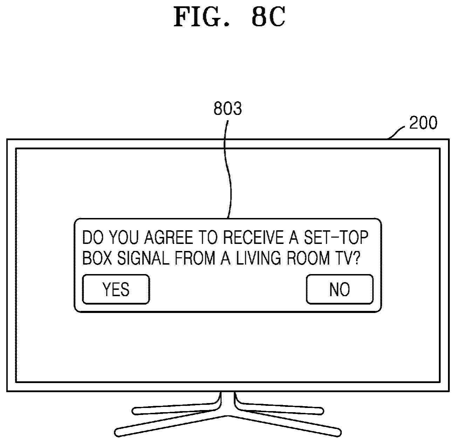

FIG. 8 is a diagram illustrating a user interface screen as to whether to accept external signal sharing with respect to an external device, according to an embodiment.

In an embodiment, an electronic device that has received a request for external signal sharing with respect to the external device may output a device list via a display. A user may select, by using a user input unit, an external device and an external electronic device from the device list output via the display.

In an embodiment, the electronic device may transmit a query signal as to whether to accept external signal sharing, to the external electronic device selected from the device list.

In an embodiment, the external electronic device that has received, from the electronic device, the query signal as to whether to accept execution of the external signal sharing function may generate a user interface screen as to whether to accept execution of the external signal sharing function, and may output it via the display.

In an embodiment, the first electronic device 100 may operate in a standby mode or a normal mode. The standby mode refers to a mode in which power of the first electronic device 100 is saved, and in the standby mode, power may be supplied only to a communication unit of the first electronic device 100 and may be blocked for other elements. Therefore, in the standby mode, only a network function may operate in the first electronic device 100.

FIG. 8A illustrates the first electronic device 100 that operates in the standby mode. As shown in FIG. 8A, while operating in the standby mode, the first electronic device 100 may output no image to the display. In this case, the display of the first electronic device 100 may be shown with a black color.

In an embodiment, the first electronic device 100 in the standby mode may receive, from the second electronic device 200, a query signal as to whether to accept external signal sharing. As the network function operates while the first electronic device 100 is in the standby mode, the first electronic device 100 may receive, from the second electronic device 200 via a communication network, the query signal as to whether to accept external signal sharing.

In an embodiment, in response to receiving the query signal as to whether to accept external signal sharing from the second electronic device 200, the first electronic device 100 may generate a user interface screen 801 as to whether to accept execution of the external signal sharing function.

FIG. 8A illustrates a source device that operates in a standby mode and outputs a user interface screen as to whether to accept external signal sharing, according to an embodiment.

For example, in an embodiment, it is assumed that the second electronic device 200 is a main room TV and has received a request for an external signal sharing function from a user. Also, it is assumed that the user has selected the second electronic device 200 as a sink device, has selected the first electronic device 100 as a source device, and has selected a set-top box as an external device.

In an embodiment, the second electronic device 200 may transmit a query signal as to whether to accept external signal sharing to the first electronic device 100 selected as an external electronic device. In an embodiment, the query signal as to whether to accept external signal sharing may include at least one of identification information of the second electronic device 200, information as to whether the first electronic device 100 is a source device or a sink device, information as to whether the second electronic device 200 is a source device or a sink device, and identification information of an external device.

In an embodiment, the first electronic device 100 may receive, from the second electronic device 200, the query signal as to whether to accept external signal sharing, and in response thereto, may generate the user interface screen 801 as to whether to accept execution of the external signal sharing function.

In an embodiment, the first electronic device 100 may display the user interface screen 801 as to whether to accept execution of the external signal sharing function, in the form of a text window on a partial area of the display of the first electronic device 100. In an embodiment, the first electronic device 100 may display the user interface screen 801 as to whether to accept execution of the external signal sharing function, at the center of the black screen. However, this is merely an embodiment, and a size, an output position, transparency, and/or a shape of the user interface screen 801 as to whether to accept execution of the external signal sharing function may be variously modified.

FIG. 8B illustrates a source device that operates in a normal mode and outputs a user interface screen as to whether to accept external signal sharing, according to an embodiment.

In an embodiment, the first electronic device 100 may operate in the normal mode. The normal mode may refer to a state in which power is supplied to all elements of the first electronic device 100. As each element of the first electronic device 100 normally operates in the normal mode, a user may normally use the first electronic device 100 according to its function, such as by viewing content by using the first electronic device 100.

FIG. 8B illustrates a case in which the first electronic device 100 that operates in the normal mode outputs other image via the display. For example, FIG. 8B illustrates the case in which the first electronic device 100 receives and outputs broadcasting content.

In an embodiment, the first electronic device 100 in the state of the normal mode may receive, from the second electronic device 200, a query signal as to whether to accept external signal sharing. In an embodiment, in response to receiving the query signal as to whether to accept external signal sharing from the second electronic device 200, the first electronic device 100 may generate the user interface screen 801 as to whether to accept execution of the external signal sharing function.

In an embodiment, the first electronic device 100 may display the user interface screen 801 as to whether to accept execution of the external signal sharing function, in the form of a text window on a partial area of the display of the first electronic device 100. In an embodiment, in response to other content being currently output, the first electronic device 100 may output the user interface screen 801 overlaid on currently-output broadcasting content, the user interface screen 801 being as to whether to accept execution of the external signal sharing function. In an embodiment, in order to prevent the currently-output broadcasting content from being blocked, the first electronic device 100 may display the user interface screen 801 as to whether to accept execution of the external signal sharing function, at the upper right side or upper left side of a screen, not the center of the screen. However, this is merely an embodiment, and a size, an output position, transparency, and/or a shape of the user interface screen 801 as to whether to accept execution of the external signal sharing function may be variously modified.

In an embodiment, a user interface screen as to whether to accept external signal sharing may include different content according to whether an entity that generates the user interface screen is a source device or a sink device.

For example, as the first electronic device 100 is a source device, the user interface screen 801 as to whether to accept execution of the external signal sharing function, which is generated by the first electronic device 100 that is a source device may include a query for the source device as to whether to accept transmission of an external device signal to a sink device.

In an embodiment, the user interface screen 801 as to whether to accept execution of the external signal sharing function, which is output by the first electronic device 100, includes a query as to whether to agree that a set-top box signal that is an external device is transmitted to the second electronic device 200, e.g., the main room TV, which is a sink device.

The user may select either a "Yes" button or a "No" button included in the user interface screen 801 as to whether to accept execution of the external signal sharing function, thereby selecting whether to execute the external signal sharing function.

In an embodiment, when a user input of selecting the "Yes" button is received, the first electronic device 100 may transmit an answer signal to accept execution of the external signal sharing function to the second electronic device 200.

In an embodiment, when the first electronic device 100 does not receive a selection of a button for a preset period of time or receives a user input of selecting the "No" button, the first electronic device 100 may determine that execution of the external signal sharing function is not accepted, and may transmit an answer signal to reject execution of the external signal sharing function to the second electronic device 200.

FIG. 8C illustrates a case in which a sink device outputs a user interface screen as to whether to accept external signal sharing.

In an embodiment, it is assumed that the first electronic device 100 is a living room TV and has received a request for an external signal sharing function from a user. Also, it is assumed that the user has selected the first electronic device 100 as a source device, has selected the second electronic device 200 as a sink device, and has selected a set-top box as an external device.

In an embodiment, the first electronic device 100 may transmit a query signal as to whether to accept external signal sharing to the second electronic device 200 selected as an external electronic device. In an embodiment, the second electronic device 200 may receive, from the first electronic device 100, a query signal as to whether to accept external signal sharing, and in response thereto, may generate a user interface screen as to whether to accept execution of the external signal sharing function.

FIG. 8C illustrates a user interface screen 803 as to whether to accept external signal sharing, which is output by the sink device when the sink device receives the query signal as to whether to accept external signal sharing from the source device.

Referring to FIG. 8C, as the second electronic device 200 is the sink device, the user interface screen 803 as to whether to accept external signal sharing, which is output by the sink device, may include a query for inquiring whether to agree that a signal of a set-top box that is an external device is received from the first electronic device 100 that is the living room TV as the source device.

The user may select either a "Yes" button or a "No" button included in the user interface screen 803 as to whether to accept execution of the external signal sharing function, thereby selecting whether to execute the external signal sharing function.

In an embodiment, when a user input of selecting the "Yes" button is received, the second electronic device 200 may transmit an answer signal to accept execution of the external signal sharing function to the first electronic device 100.

In an embodiment, when the second electronic device 200 receives a user input of selecting the "No" button or does not receive any selection for a preset period of time, the second electronic device 200 may determine that execution of the external signal sharing function is not accepted, and may transmit an answer signal to reject execution of the external signal sharing function to the first electronic device 100.

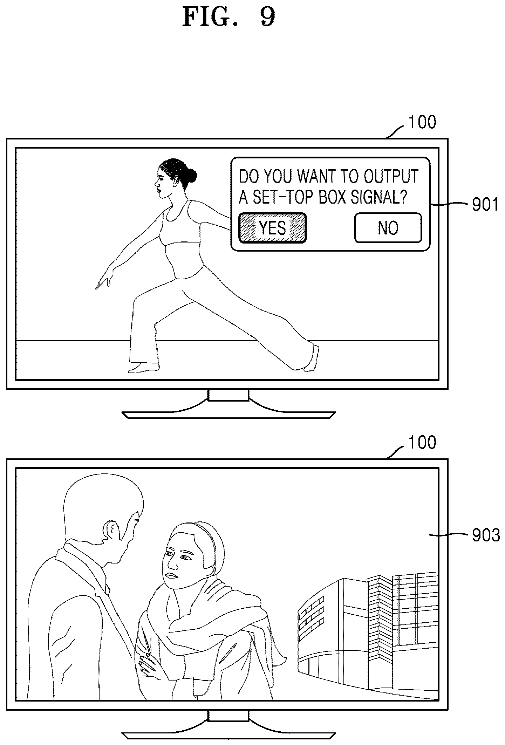

FIG. 9 is a diagram illustrating a source device that outputs an image signal from an external device, according to an embodiment.

In an embodiment, the source device may transmit an image signal of an external device to a sink device, and thus, may execute an external signal sharing function.

In an embodiment, the source device may receive the image signal of the external device via an external device interface from the external device. In an embodiment, the source device may encode the image signal of the external device and may transmit the encoded image signal to the sink device.

In an embodiment, the source device may transmit the image signal of the external device to the sink device and may simultaneously output the image signal of the external device via a display.

Alternatively, in an embodiment, the source device may transmit the image signal of the external device to the sink device and may output content other than the image signal of the external device via a screen of the source device.

Alternatively, in an embodiment, the source device that operates in a standby mode may not output any image and may perform an operation of transmitting the image signal of the external device to the sink device in the background.

FIG. 9 illustrates a case in which, when the first electronic device 100 that is the source device transmits the image signal of the external device to the second electronic device 200 that is the sink device, the first electronic device 100 outputs content other than the image signal of the external device. For example, the source device may output a broadcasting program received in real time via the display.

In an embodiment, in response to the source device not outputting the image signal of the external device, the source device may output a user interface screen for inquiring whether to output the image signal of the external device via the source device.

Referring to FIG. 9, in an embodiment, the first electronic device 100 may output a user interface screen 901 for inquiring whether to output an image signal of an external device, on a partial area of the display.

In an embodiment, the user interface screen 901 for inquiring whether to output an image signal of an external device may include text for inquiring whether to output a signal of the external device. For example, when the external device is a set-top box, the user interface screen 901 for inquiring whether to output an image signal of an external device may include text "Do you want to output a set-top box signal?" as shown in FIG. 9.

In an embodiment, the source device may output, via the display, the user interface screen 901 for inquiring whether to output an image signal of an external device, within a preset time from a point in time when transmission of the image signal of the external device to the sink device started.

In an embodiment, in response to the user interface screen 901 for inquiring whether to output an image signal of an external device being output, a user of the first electronic device 100 may determine whether to output the image signal of the external device via the first electronic device 100, by using a "Yes" button or a "No" button included in the user interface screen 901 for inquiring whether to output an image signal of an external device.

In an embodiment, when a user input of selecting "Yes" is received, the first electronic device 100 may output the image signal of the external device via the screen of the first electronic device 100.

Referring to FIG. 9, reference numeral 903 illustrates a case in which the image signal of the external device is output via the screen of the first electronic device 100 when the user input of selecting "Yes" is received via the user interface screen 901 of the first electronic device 100 for inquiring whether to output an image signal of an external device.

In this case, the first electronic device 100 may output the image signal of the external device via the screen of the first electronic device 100 and may simultaneously perform an operation of encoding the image signal of the external device and transmitting the encoded image signal to the second electronic device 200.

In an embodiment, when a user input of selecting "No" is received, the first electronic device 100 may stop outputting the user interface screen 901 for inquiring whether to output an image signal of an external device. In this case, the first electronic device 100 may perform only the operation of encoding the image signal of the external device and transmitting the encoded image signal to the second electronic device 200, and may continuously output previously-output content via the screen of the first electronic device 100.

In an embodiment, when the user does not select any one of "Yes" or "No", the first electronic device 100 may automatically end outputting the user interface screen 901 for inquiring whether to output an image signal of an external device after an elapse of a preset time from a point in time when the user interface screen 901 for inquiring whether to output an image signal of an external device was output. Afterward, the first electronic device 100 may output again the user interface screen 901 for inquiring whether to output an image signal of an external device, at regular intervals or random intervals.

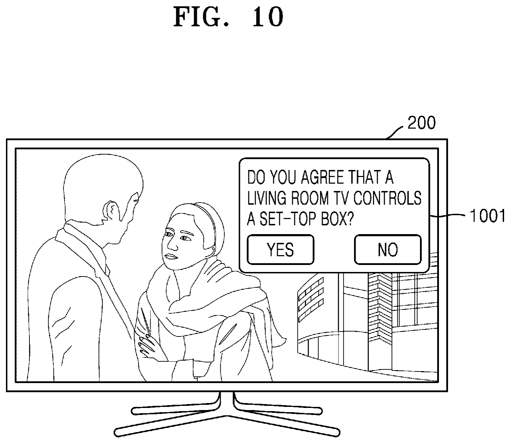

FIG. 10 is a diagram illustrating an electronic device that outputs a user interface screen for a control authority transfer request, according to an embodiment.

Referring to FIG. 10, in an embodiment, one electronic device from among a source device and a sink device may have control authority over an external device.

In an embodiment, control authority over an external device may be variously determined.

For example, in an embodiment, it is configured that the source device has control authority over an external device as a default. Alternatively, in an embodiment, it may be determined that an electronic device from among the source device and the sink device which first outputs an image signal of an external device via a display has control authority over the external device.

In an embodiment, when an electronic device without control authority receives a control signal with respect to an external device, the electronic device without control authority may transmit a control authority transfer request signal to an electronic device having control authority.

For example, a case is assumed in which the second electronic device 200 has control authority over the external device 130 and the first electronic device 100 without control authority has transmitted a control authority transfer request signal to the second electronic device 200. In an embodiment, the second electronic device 200 may receive the control authority transfer request signal from the first electronic device 100.

FIG. 10 illustrates the second electronic device 200 that outputs a control authority transfer user interface screen 1001, in response to receiving the control authority transfer request signal, according to an embodiment.

In an embodiment, the second electronic device 200 may output the control authority transfer user interface screen 1001, in the form of a text window on a partial area of the display.

In an embodiment, the control authority transfer user interface screen 1001 may include text with content for inquiring whether to agree that other electronic device controls the external device 130. For example, when the external device 130 is a set-top box, and the first electronic device 100 that has transmitted the control authority transfer request signal is a living room TV, as shown in FIG. 10, the control authority transfer user interface screen 1001 may include text "Do you agree that a living room TV controls a set-top box?". However, this is merely an embodiment, and the control authority transfer user interface screen 1001 may include text "Do you want to transfer control authority to a living room TV?" that directly inquires whether to agree transfer of control authority.

In an embodiment, in response to the control authority transfer user interface screen 1001 being output, a user of the second electronic device 200 may determine whether to transfer control authority, by using a "Yes" button or "No" button included in the control authority transfer user interface screen 1001.

In an embodiment, when a user input of selecting "Yes" is received, the second electronic device 200 may generate a control authority transfer accept signal, and may transmit the signal to the first electronic device 100 that has transmitted the control authority transfer request signal. In this case, the first electronic device 100 may be transferred control authority from the second electronic device 200.

In an embodiment, when a user input of selecting "No" is received, the second electronic device 200 may not transmit the control authority transfer accept signal to the first electronic device 100, or may transmit a control authority transfer reject signal to the first electronic device 100. In an embodiment, when the first electronic device 100 does not receive the control authority transfer accept signal from the second electronic device 200 within a preset time, or receives the control authority transfer reject signal from the second electronic device 200, the first electronic device 100 may determine that control authority has not been transferred.

In an embodiment, in response to a control authority transfer request being rejected, the first electronic device 100 may output text with content indicating that it is not possible to control an external device, via the display of the first electronic device 100.

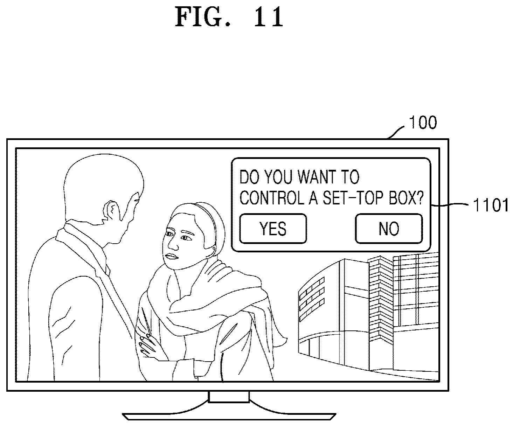

FIG. 11 is a diagram illustrating a source device that outputs a control authority forcible transfer user interface screen, according to an embodiment.

In an embodiment, when an electronic device without control authority receives a control signal with respect to the external device 130 from a control device, the electronic device without control authority may transmit a control authority transfer request signal to an electronic device having control authority.

In an embodiment, the electronic device having control authority may reject control authority transfer to the electronic device that has requested the control authority transfer.

However, in a case where the electronic device having control authority is a sink device and the electronic device that has requested the control authority transfer is a source device, and the source device is rejected for the control authority transfer by the sink device, a user of the source device may feel that rejection of control authority over the external device 130 is inappropriate.

According to an embodiment, with an external signal sharing function, a source device is connected to the external device 130, receives an image signal from the external device 130, and transmits it to a sink device, so that it may be appropriate to give control authority over the external device 130 to the source device that provides the external signal sharing function.

In an embodiment, when the source device is rejected for the control authority transfer by the sink device, the source device may output a control authority forcible transfer user interface screen so as to forcibly take over control authority with respect to an external device.

In an embodiment, a case is assumed in which the first electronic device 100 that is the source device has transmitted a control authority transfer request signal to the second electronic device 200 that is the sink device, but a control authority transfer accept signal is not received from the second electronic device 200 for a preset time or a control authority transfer reject signal is received from the second electronic device 200.

FIG. 11 illustrates a case in which, when the first electronic device 100 is rejected for control authority transfer by the second electronic device 200, the first electronic device 100 outputs a control authority forcible transfer user interface screen 1101, according to an embodiment.

In an embodiment, when an external device is a set-top box, the control authority forcible transfer user interface screen 1101 may include text, e.g., "Do you want to control set-top box?". However, this is merely an embodiment, and the control authority forcible transfer user interface screen 1101 may include text with content for inquiring, e.g., "Do you want to forcibly take over control authority?", whether it is desired to directly take over control authority from the sink device. Alternatively, in an embodiment, the control authority forcible transfer user interface screen 1101 may include an icon having a particular shape and a particular color. For example, the icon having the particular shape and the particular color may correspond to a red color remote-controller shape.

In an embodiment, in response to the control authority transfer user interface screen 1001 being output, a user of the first electronic device 100 may determine whether to forcibly transfer control authority, by using a "Yes" button or a "No" button included in the control authority forcible transfer user interface screen 1101 or using an icon having a particular shape and a particular color.

In an embodiment, when a user input of selecting "Yes" or a user input of selecting the icon is received, the first electronic device 100 may forcibly take over control authority with respect to an external device. In an embodiment, in response to control authority being forcibly transferred, the first electronic device 100 has control authority for controlling an operation of the external device.

In an embodiment, when the first electronic device 100 has control authority, in response to a control signal being received from a control device, the first electronic device 100 may determine whether the first electronic device 100 is able to directly perform an operation according to the control signal. In an embodiment, when the electronic device 100 is able to directly perform the operation according to the control signal, the first electronic device 100 may directly perform the operation according to the control signal. In an embodiment, when the electronic device 100 is not able to directly perform the operation according to the control signal, the first electronic device 100 may generate a second control signal corresponding to the first control signal.

In an embodiment, the control device that transmits the control signal to the first electronic device 100 may be a multi-brand remote controller capable of controlling other electronic devices as well as the first electronic device 100. The multi-brand remote controller may be a device for controlling various types of devices, regardless of their brands. The user may control, by using the multi-brand remote controller, not only the first electronic device 100 but also control the second electronic device 200 or the external device 130 together. For example, the user may control, by using the multi-brand remote controller, various types of the external device 130, e.g., a PC, a set-top box, a Blu-ray player, a mobile phone, a game console, a home theater, or the like.

In an embodiment, when the first electronic device 100 receives a control signal for controlling the external device 130 from the control device, the first electronic device 100 may generate a control signal corresponding to the received control signal. For example, when the first electronic device 100 receives a first control signal from the control device, the first electronic device 100 may generate a second control signal corresponding to the first control signal. In an embodiment, the second control signal may be a control signal including control code information corresponding to the external device 130.

In an embodiment, the memory 103 of the first electronic device 100 may have stored therein the control code information of the external device 130. In an embodiment, the control code information is information for controlling the external device 130, and more particularly, may include information about each key of an external device-dedicated control device for controlling the external device 130 and information (e.g., waveform) about a control signal occurring in response to a selection of each key.

In an embodiment, the memory 103 of the first electronic device 100 may have stored therein control conde information for each of various types of external devices or each of various types of external electronic devices. In an embodiment, the memory 103 of the first electronic device 100 may have stored therein control code information of a plurality of external devices or external electronic device, the control code information being received from an external server.

In an embodiment, the first electronic device 100 may read control code information for controlling the external device 130 from the memory 103.

In an embodiment, the first electronic device 100 may identify the external device 130, and may obtain, from the memory 103, control code information corresponding to the identified external device 130.

In an embodiment, the first electronic device 100 may identify the external device 130, based on identification information included in an input signal transmitted by the external device 130. In detail, the first electronic device 100 may obtain identification information of the external device 130, based on CEC information or info-frame, or the like. The CEC information is information for supporting a CEC function that allows devices connected via HDMI to control each other, and may include identification of each device. Also, the info-frame is a structure that includes transmitted data, and may include a video stream, an audio stream, identification information, or the like.

The identification information may include a type, a manufacturer, a model name, a unique identification number, an identification name, or the like of the external device 130. However, the present disclosure is not limited thereto, and the first electronic device 100 may identify the external device 130 by using various information including external device identification information included in a captured screen, meta data included in an image signal transmitted from the external device 130, or the like.

In an embodiment, when the first electronic device 100 receives a control signal for controlling the external device 130 from a user, the first electronic device 100 may read the control code information of the external device 130 by using the identification information of the external device 130. In an embodiment, the first electronic device 100 may generate a second control signal corresponding to a first control signal by using the control code information of the external device 130, and may transmit the second control signal to the control device.

In an embodiment, in response to the second control signal being received from the first electronic device 100, the control device may control the external device 130 by transmitting the second control signal to the external device 130.

Alternatively, in an embodiment, the first electronic device 100 may generate the second control signal, and may directly transmit the second control signal to the external device 130. For example, the first electronic device 100 may directly transmit the second control signal to the external device 130 by using a RF communication module.

Alternatively, in an embodiment, the first electronic device 100 may transmit the second control signal to the external device 130 via a CEC channel of HDMI.

In an embodiment, the first electronic device 100 may be connected to the external device 130 via an external device interface such as HDMI. The HDMI may include a plurality of independent communication channels/lines including transition minimized differential signaling (TMDS), display data channel (DDC), consumer electronics control (CEC), hot plug detect (HPD), or the like. In an embodiment, the first electronic device 100 and the external device 130 may transmit or receive a control command via a CEC line/channel. The CEC line refers to a protocol that performs a high-level control function in the HDMI, and may control an interaction between the first electronic device 100 and the external device 130.

In an embodiment, the first electronic device 100 may transmit the second control signal for controlling the external device 130 to the external device 130 via the CEC channel. The external device 130 may receive the second control signal from the first electronic device 100 via the CEC channel, and may be controlled according to the second control signal.

In an embodiment, when a user input of selecting "No" is received, the first electronic device 100 does not forcibly take over control authority and may not perform an operation according to a control signal from the first control device 110. Alternatively, the first electronic device 100 may output, via the display, text with content indicating that it is not possible to control an external device due to absence of control authority.

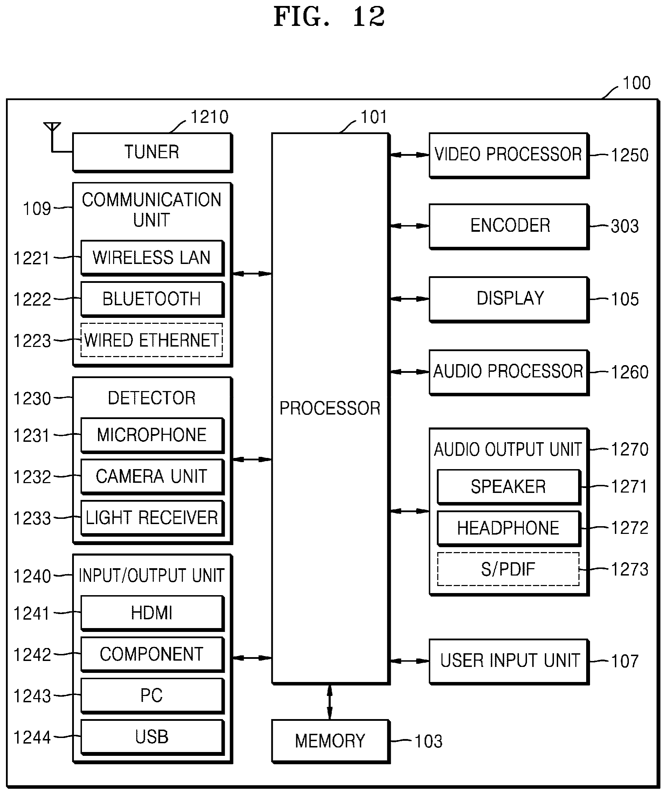

FIG. 12 is a block diagram of the first electronic device 100 according to an embodiment.

The first electronic device 100 of FIG. 12 may be an example of the first electronic device 100 shown in FIGS. 2 and 3. Hereinafter, descriptions overlapping those of FIGS. 2 and 3 are not provided here.

Referring to FIG. 12, the first electronic device 100 may further include a tuner 1210, a detector 1230, an input/output unit 1240, a video processor 1250, an audio processor 1260, and an audio output unit 1270, in addition to the processor 101, the memory 103, the display 105, the user input unit 107, the communication unit 109, and the encoder 303.

The tuner 1210 may tune and then select only a frequency of a channel that is to be received by the first electronic device 100 from among many radio wave components via amplification, mixing, resonance, or the like of broadcasting content in a wired or wireless manner. The content received via the tuner 1210 may be decoded and divided into audio, video, and/or additional information. The divided audio, video, and/or additional information may be stored in the memory 103 under the control of the processor 101.

In an embodiment, the communication unit 109 may connect the first electronic device 100 to an external electronic device including the second electronic device 200, a control device, a peripheral device, a server, a mobile terminal, etc., under the control of the processor 101.

According to an embodiment, the communication unit 109 may transmit/receive data or a signal to/from an external device or a server. In an embodiment, video data and audio data which are encoded by the encoder 303 may be generated with preset formats defined by each video codec and audio codec and may be transmitted to the second electronic device 200 via the communication unit 109.

The communication unit 109 may include at least one of a wireless LAN module 1221, a Bluetooth module 1222, and wired Ethernet 1223 according to the performance and structure of the first electronic device 100. Also, the communication unit 109 may include a Wi-Fi module, an IR communication module, etc., in addition to a wireless communication module, a LAN module, an Ethernet module, and a wired communication module. In this regard, each communication module may be implemented as at least one chip.

In an embodiment, the wireless LAN module 1221 may transmit or receive a Wi-Fi signal to or from neighboring devices, according to the Wi-Fi communication standard. The Wi-Fi module performs communication using a Wi-Fi scheme. When using a Wi-Fi module, various connection information such as a service set identifier (SSID) and a session key may be first transmitted or received, and after communication is connected by using the information, various types of information may be transmitted or received.

The communication unit 109 may include at least one communication module capable of performing wireless communication. The wireless communication module may include at least one communication chip that performs communication according to various wireless communication standards such as ZigBee, 3^{rd}-Generation (3G), 3^{rd} Generation Partnership Project (3GPP), Long Term Evolution (LTE), LTE Advanced (LTE-A), 4^{th}-Generation (4G), 5^{th}-Generation (5G), or the like.

The Bluetooth module 1222 may receive a Bluetooth signal transmitted from neighboring devices according to the Bluetooth communication standard. The Bluetooth module 1222 may correspond to a BLE communication module, and may receive a BLE signal. The Bluetooth module 1222 may constantly or temporarily scan a BLE signal so as to detect whether a BLE signal is received.

The detector 1230 may detect speech of a user, an image of the user, or an interaction with the user and may include a microphone 1231, a camera unit 1232, and a light receiver 1233. The microphone 1231 may receive an audio signal including uttered speech of the user or noise, may convert the received audio signal into an electrical signal, and may output the electrical signal to the processor 101.

The camera unit 1232 may include a sensor (not shown) and a lens (not shown), and may capture an image formed on a screen and transmit the image to the processor 101.

The light receiver 1233 may receive an optical signal (including a control signal). The light receiver 1233 may receive an optical signal corresponding to a user input (e.g., a touch, a press, a touch gesture, a speech, or a motion) from the control device such as a remote controller or a mobile phone.

The input/output unit 1240 may receive a video (e.g., a dynamic image signal or a still image signal), audio (e.g., a speech signal or a music signal), and additional information from an external server under the control of the processor 101.

In an embodiment, the input/output unit 1240 may include the external device interface 301. In an embodiment, the input/output unit 1240 may receive an image signal from the external device 130 via the external device interface 301.

The input/output unit 1240 may include one of a HDMI port 1241, a component jack 1242, a PC port 1243, and a USB port 1244. The input/output unit 1240 may include a combination of the HDMI port 1241, the component jack 1242, the PC port 1243, and the USB port 1244. In an embodiment, the first electronic device 100 may receive an image signal from the external device 130 by using the HDMI port 1241 as the external device interface 301.

The video processor 1250 may process image data to be displayed by the display 105 and may perform, on the image data, various image processing operations such as decoding, rendering, scaling, noise cancellation, frame rate conversion, and resolution conversion.

According to an embodiment, the encoder 303 may encode an image signal received from the external device 130 via the external device interface 301. The encoder 303 may compress a still image by using a JPEG compression scheme, and may compress a moving picture by using a compression scheme including MPEG2, H.264, HEVC, or the like. Also, the encoder 303 may compress an audio signal included in an image signal from the external device 130. For example, the encoder 303 may compress audio by using a compression scheme including AAC-LC, or the like.

The display 105 may output, on the screen, content received from a broadcasting station, content received from an external server or an external device such as an external storage medium, or content provided by various applications such as an OTT service provider or a metaverse content provider. The content is a media signal and may include a video signal, an image, a text signal, or the like.

In an embodiment, the display 105 may output various types of a user interface screen in various situations.

The audio processor 1260 performs processing on audio data. The audio processor 1260 may perform various types of processing including decoding, amplification, noise cancellation, etc. on audio data.

The audio output unit 1270 may output audio included in content received via the tuner 1210, audio input via the communication unit 109 or the input/output unit 1240, and audio stored in the memory 103, under the control of the processor 101. The audio output unit 1270 may include at least one of a speaker 1271, a headphone 1272, or a Sony/Philips digital interface (S/PDIF) output terminal 1273.

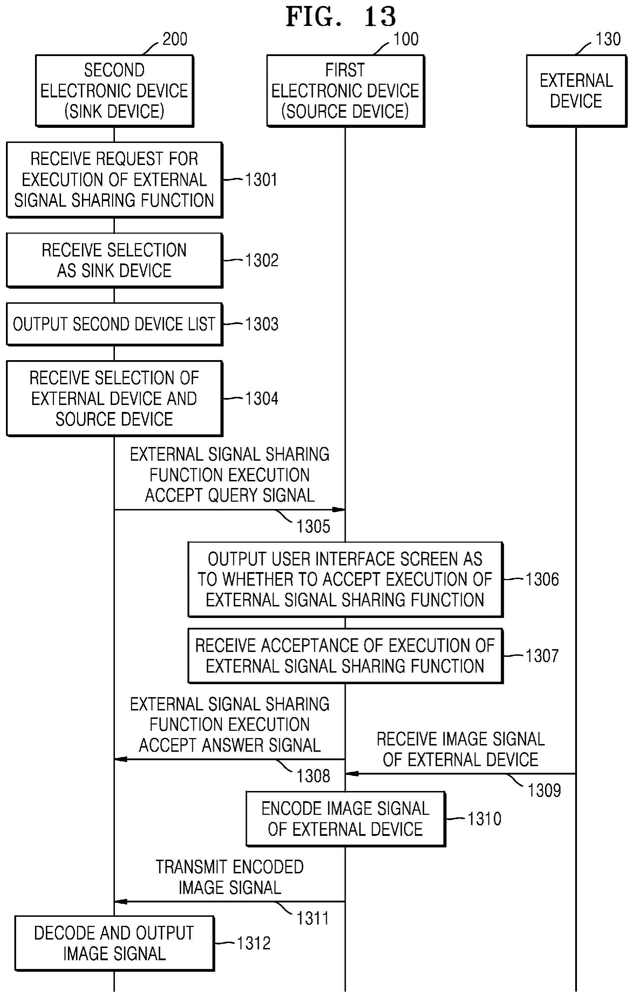

FIG. 13 is a flowchart illustrating a procedure in which a plurality of electronic devices perform an external signal sharing function, according to an embodiment.

Referring to FIG. 13, in an embodiment, the second electronic device 200 may receive a request for external signal sharing (operation 1301). For example, the second electronic device 200 may be requested, by a user of the second electronic device 200, to execute an external signal sharing function.

In an embodiment, in response to receiving the request for external signal sharing, the second electronic device 200 may determine whether the second electronic device 200 is a sink device or a source device.

In an embodiment, when the second electronic device 200 receives a selection indicating that the second electronic device 200 is the sink device (operation 1302), the second electronic device 200 may output a second device list, in response thereto (operation 1303). In an embodiment, the second device list may be a device list including a source device list and an external device list.

In an embodiment, the second electronic device 200 may receive a selection of an external device and a source device from the second device list (operation 1304). In an embodiment, in response to the second device list being output, the user of the second electronic device 200 may select the external device to provide an image signal, from the external device list included in the second device list. Also, in response to the second device list being output, the user of the second electronic device 200 may select an external electronic device as the source device to share the image signal, from the source device list included in the second device list.

In an embodiment, in response to the external device and the source device being selected, the second electronic device 200 may transmit, to the source device, a signal for inquiring whether to accept execution of the external signal sharing function. In an embodiment, in response to the first electronic device 100 being selected as the source device, the second electronic device 200 may transmit an external signal sharing function execution accept query signal to the first electronic device 100 (operation 1305).

In an embodiment, in response to the external signal sharing function execution accept query signal being received from the second electronic device 200, the first electronic device 100 may output a user interface screen as to whether to accept external signal sharing (operation 1306).

In an embodiment, when execution of the external signal sharing function is accepted by a user (operation 1307), in response thereto, the first electronic device 100 may transmit an external signal sharing function execution accept answer signal to the second electronic device 200 (operation 1308).

Also, in an embodiment, in response to execution of the external signal sharing function being accepted by the user, the first electronic device 100 may be connected to the external device 130. In an embodiment, the first electronic device 100 may be connected to the external device 130, and may receive an image signal of the external device 130 from the external device 130 (operation 1309).

In an embodiment, the first electronic device 100 may encode the image signal of the external device 130 received from the external device 130 (operation 1310).

In an embodiment, the first electronic device 100 may transmit the encoded image signal to the second electronic device 200 (operation 1311).

In an embodiment, the first electronic device 100 transmits the encoded image signal to the second electronic device 200, thereby sharing the image signal of the external device 130 with the second electronic device 200.

In an embodiment, the second electronic device 200 may receive the encoded image signal from the first electronic device 100, and may decode and output the image signal (operation 1312). In an embodiment, the second electronic device 200 may receive the image signal of the external device 130 from the first electronic device 100, thereby sharing the image signal of the external device 130 with the first electronic device 100.

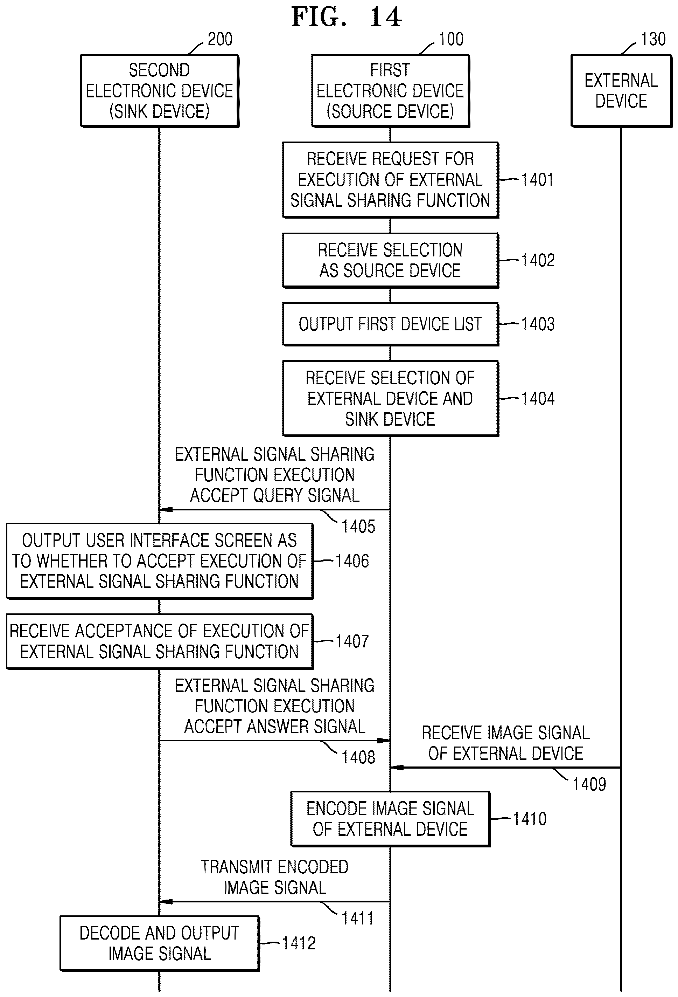

FIG. 14 is a flowchart illustrating a procedure in which a plurality of electronic devices perform an external signal sharing function, according to an embodiment.

Referring to FIG. 14, in an embodiment, the first electronic device 100 may receive a request for external signal sharing (operation 1401). For example, the first electronic device 100 may be requested, by a user of the first electronic device 100, to execute an external signal sharing function.

Referring to FIG. 13, an electronic device receiving a request for external signal sharing is the second electronic device 200, and referring to FIG. 14, an electronic device receiving a request for external signal sharing is the first electronic device 100, so that FIG. 14 is different from FIG. 13.

In an embodiment, in response to receiving the request for external signal sharing, the first electronic device 100 may identify whether the first electronic device 100 is a sink device or a source device.

In an embodiment, when the first electronic device 100 receives a selection as the source device (operation 1402), the first electronic device 100 may output a first device list, in response thereto (operation 1403). In an embodiment, the first device list may be a device list including a sink device list and an external device list.

In an embodiment, the first electronic device 100 may receive a selection of an external device and a sink device (operation 1404). In an embodiment, in response to the first device list being output, a user of the first electronic device 100 may select an external device to provide an image signal, from the external device list included in the first device list. Also, in response to the first device list being output, the user of the first electronic device 100 may select an external electronic device to share the image signal as the sink device, from the sink device list included in the first device list.

In an embodiment, in response to the external device and the sink device being selected, the first electronic device 100 may transmit an external signal sharing function execution accept query signal to the second electronic device 200 that is the sink device (operation 1405).

In an embodiment, in response to the external signal sharing function execution accept query signal being received from the first electronic device 100, the second electronic device 200 may output a user interface screen as to whether to accept external signal sharing (operation 1406).

In an embodiment, when execution of the external signal sharing function is accepted (operation 1407), in response thereto, the second electronic device 200 may transmit an external signal sharing function execution accept answer signal to the first electronic device 100 (operation 1408).

In an embodiment, in response to the external signal sharing function execution accept answer signal being received from the second electronic device 200, the first electronic device 100 may be connected to the external device 130. In an embodiment, the first electronic device 100 may be connected to the external device 130, and may receive an image signal of the external device 130 from the external device 130 (operation 1409).

In an embodiment, the first electronic device 100 may encode the image signal of the external device 130 received from the external device 130 (operation 1410), and may transmit the encoded image signal to the second electronic device 200 (operation 1411).

In an embodiment, the first electronic device 100 transmits the encoded image signal to the second electronic device 200, thereby sharing the image signal of the external device 130 with the second electronic device 200. In an embodiment, the second electronic device 200 may receive the encoded image signal from the first electronic device 100, and may decode and output the image signal (operation 1412).

In an embodiment, the second electronic device 200 may receive the image signal of the external device 130 from the first electronic device 100, thereby sharing the image signal of the external device 130 with the first electronic device 100.

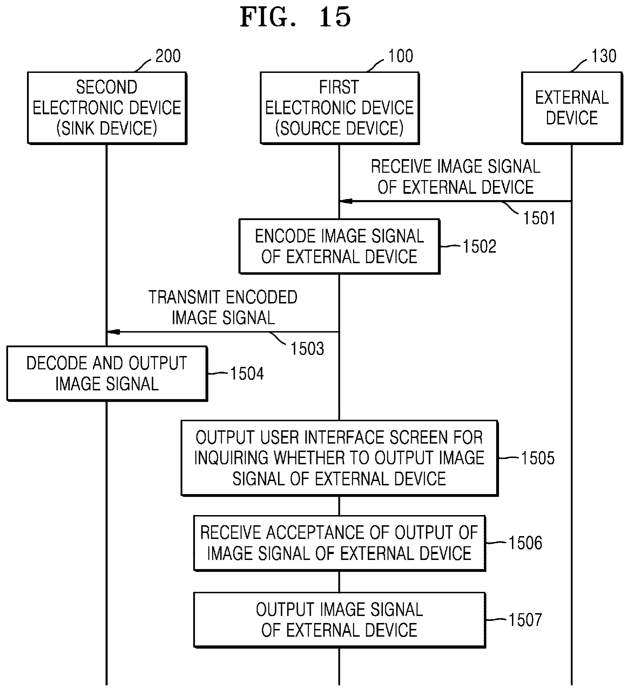

FIG. 15 is a flowchart illustrating a source device that outputs an image signal of an external device, according to an embodiment.

Referring to FIG. 15, according to an embodiment, the first electronic device 100 may receive an image signal of the external device 130 from the external device 130 (operation 1501), may encode the image signal of the external device 130 (operation 1502), and may transmit the encoded image signal to the second electronic device 200 (operation 1503).

In an embodiment, the first electronic device 100 transmits the encoded image signal to the second electronic device 200, thereby sharing the image signal of the external device 130 with the second electronic device 200.

In an embodiment, the second electronic device 200 may receive the encoded image signal from the first electronic device 100, and may decode and output the image signal (operation 1504).

In an embodiment, the second electronic device 200 may receive the image signal of the external device 130 from the first electronic device 100, thereby sharing the image signal of the external device 130 with the first electronic device 100.

In an embodiment, when the first electronic device 100 transmits the image signal of the external device 130 to the second electronic device 200, the first electronic device 100 may simultaneously operate in a standby mode, thereby outputting no image to a screen or outputting content other than the image signal of the external device 130.

In an embodiment, in response to the first electronic device 100 not outputting the image signal of the external device 130, the first electronic device 100 may output a user interface screen for inquiring whether to output an image signal of an external device via a source device (operation 1505).

In an embodiment, when a user selection of outputting the image signal of the external device is received (operation 1506), the first electronic device 100 may output the image signal of the external device 130 (operation 1507). **In** this case, the first electronic device 100 may output the image signal of the external device 130 via a screen of the first electronic device 100, and may simultaneously perform an operation of encoding the image signal of the external device 130 and transmitting the encoded image signal to the second electronic device 200.

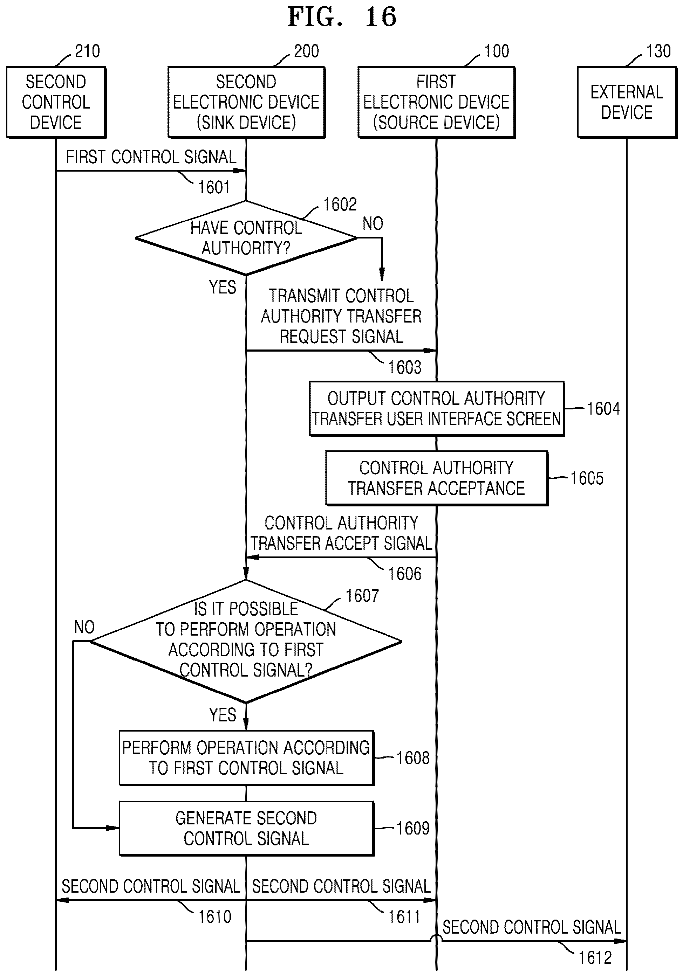

FIG. 16 is a flowchart of transferring control authority, according to an embodiment.

Referring to FIG. 16, according to an embodiment, the first electronic device 100 and the second electronic device 200 are in a state of sharing an image signal of the external device 130.

In an embodiment, while a user of the second electronic device 200 uses the image signal of the external device 130 by using the second electronic device 200, the user may transmit a first control signal for controlling the external device 130 to the second electronic device 200 by using the second control device 210 (operation 1601).

In an embodiment, in response to the first control signal being received from the second control device 210, the second electronic device 200 may determine whether the second electronic device 200 has control authority over the external device 130 (operation 1602).

In an embodiment, when the second electronic device 200 determines that the second electronic device 200 does not have control authority over the external device 130 (NO), the second electronic device 200 may transmit a control authority transfer request signal to the first electronic device 100 that has the control authority (operation 1603).

In an embodiment, in response to the control authority transfer request signal being received from the second electronic device 200, the first electronic device 100 may output a control authority transfer user interface screen (operation 1604). When the first electronic device 100 receives a selection of a control authority transfer acceptance from a user of the first electronic device 100 (operation 1605), the first electronic device 100 may transmit a control authority transfer accept signal to the second electronic device 200 (operation 1606).

In an embodiment, when the second electronic device 200 determines that the second electronic device 200 has control authority over the external device 130, or the second electronic device 200 is transferred control authority from the first electronic device 100, the second electronic device 200 may determine that it is possible for the second electronic device 200 to perform an operation according to the first control signal (operation 1607).

In an embodiment, when the second electronic device 200 determines that it is possible for the second electronic device 200 to perform the operation according to the first control signal (YES), the second electronic device 200 may perform the operation according to the first control signal (operation 1608).

In an embodiment, when the second electronic device 200 determines that it is not possible for the second electronic device 200 to perform the operation according to the first control signal (NO), the second electronic device 200 may generate a second control signal corresponding to the first control signal (operation 1609). **In** an embodiment, the second control signal corresponding to the first control signal may be a control signal including control code information with respect to the external device 130.

In an embodiment, the second electronic device 200 may transmit the second control signal to the second control device 210, may transmit it to the first electronic device 100 that is the source device, or may transmit it to the external device 130.

In an embodiment, the memory 203 of the second electronic device 200 may have stored therein control code information for controlling the external device 130. In an embodiment, the second electronic device 200 may identify the external device 130, and may obtain control code information corresponding to the identified external device 130 from the memory 203.

In an embodiment, the second electronic device 200 may obtain identification information about the external device 130. For example, in an embodiment, the second electronic device 200 may receive the identification information about the external device 130 from the first electronic device 100. The first electronic device 100 may have the identification information of the external device 130, based on a CEC channel, or the like. Also, in an embodiment, in a case where the second electronic device 200 has generated a device list, the second electronic device 200 may have obtained in advance the identification information of the external device 130.

In an embodiment, when the second electronic device 200 receives a control signal for controlling the external device 130 from a user of the second electronic device 200, the second electronic device 200 may read the control code information of the identified external device 130 by using the identification information of the external device 130. In an embodiment, the second electronic device 200 may generate a second control signal corresponding to the first control signal, by using the control code information of the identified external device 130, and may transmit the second control signal to the second control device 210.

In an embodiment, in response to the second control signal being received from the second electronic device 200, the second control device 210 may transmit the second control signal to the external device 130 by using IR communication or RF communication, and thus, may control the external device 130.

Also, in an embodiment, the second electronic device 200 may generate the second control signal, and may transmit the second control signal to the first electronic device 100. For example, the second electronic device 200 may transmit the second control signal to the first electronic device 100 by using IR communication, RF communication, or the like. When the first electronic device 100 receives the second control signal from the second electronic device 200, the first electronic device 100 may transmit the second control signal to the external device 130 via a CEC channel, etc., and thus, may allow the external device 130 to be controlled according to the second control signal.

Alternatively, in an embodiment, the second electronic device 200 may generate the second control signal, and may directly transmit the second control signal to the external device 130. For example, the second electronic device 200 may directly transmit the second control signal to the external device 130 by using an RF communication module, thereby controlling the external device 130.

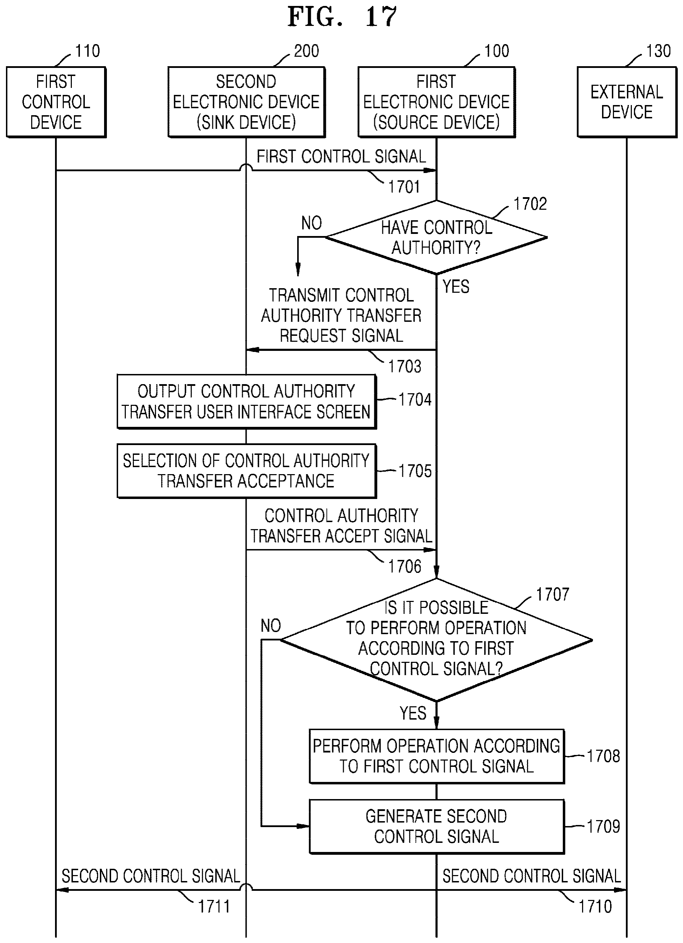

FIG. 17 is a flowchart of transferring control authority, according to an embodiment.

Referring to FIG. 16, according to an embodiment, the first electronic device 100 and the second electronic device 200 are in a state of sharing an image signal of the external device 130.

In an embodiment, while a user of the first electronic device 100 uses the image signal of the external device 130 by using the first electronic device 100, the user may transmit a first control signal for controlling the external device 130 to the first electronic device 100 by using the first control device 110 (operation 1701).

In an embodiment, in response to the first control signal being received from the first control device 110, the first electronic device 100 may determine whether the first electronic device 100 has control authority over the external device 130 (operation 1702).

In an embodiment, when the first electronic device 100 determines that the first electronic device 100 does not have control authority over the external device 130 (NO), the first electronic device 100 may transmit a control authority transfer request signal to the second electronic device 200 that has the control authority (operation 1703).

In an embodiment, in response to the control authority transfer request signal being received from the first electronic device 100, the second electronic device 200 may output a control authority transfer user interface screen (operation 1704). When the second electronic device 200 receives a selection of a control authority transfer acceptance from a user of the second electronic device 200 (operation 1705), the second electronic device 200 may transmit a control authority transfer accept signal to the first electronic device 100 (operation 1706).

In an embodiment, when the first electronic device 100 determines that the first electronic device 100 has control authority over the external device 130, or the first electronic device 100 is transferred control authority from the second electronic device 200, the first electronic device 100 may determine that it is possible for the first electronic device 100 to perform an operation according to the first control signal (operation 1707).

In an embodiment, when the first electronic device 100 determines that it is possible for the first electronic device 100 to perform the operation according to the first control signal (YES), the first electronic device 100 may perform the operation according to the first control signal (operation 1708).

In an embodiment, when the first electronic device 100 determines that it is not possible for the first electronic device 100 to perform the operation according to the first control signal (YES), the first electronic device 100 may perform the operation according to the first control signal (operation 1709).

In an embodiment, the first electronic device 100 may have the identification information of the external device 130, based on a CEC channel, or the like. In an embodiment, the first electronic device 100 may identify the external device 130, and may obtain control code information corresponding to the identified external device 130 from the memory 103.

In an embodiment, the first electronic device 100 may generate the second control signal corresponding to the first control signal by using the control code information of the external device 130, and may transmit the second control signal to the first control device 110 (1711).

In an embodiment, in response to the second control signal being received from the first electronic device 100, the first control device 110 may control the external device 130 by transmitting the second control signal to the external device 130 by using IR communication or an RF communication module.

Alternatively, in an embodiment, the first electronic device 100 may generate the second control signal, and may directly transmit the second control signal to the external device 130 (operation 1710). For example, the first electronic device 100 transmits the second control signal the external device 130 via a CEC channel, or the like, and thus, may allow the external device 130 to be controlled according to the second control signal.

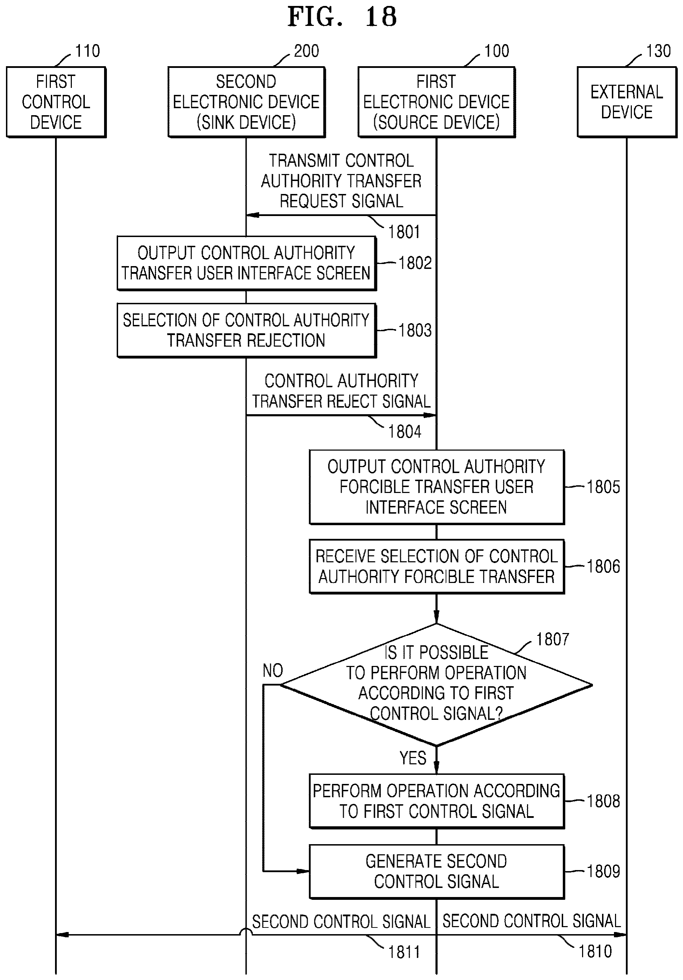

FIG. 18 is a flowchart illustrating a method by which a source device forcibly takes over control authority with respect to the external device 130 from a source device, according to an embodiment.

According to an embodiment, a case is assumed in which, while the first electronic device 100 and the second electronic device 200 share an image signal of the external device 130, the first electronic device 100 receives a first control signal for controlling the external device 130 from the first control device 110. Also, a case is assumed in which the first electronic device 100 does not have control authority over the external device 130

In an embodiment, the first electronic device 100 may transmit a control authority transfer request signal to the second electronic device 200 that has control authority (operation 1801).

In an embodiment, in response to the control authority transfer request signal being received from the first electronic device 100, the second electronic device 200 may output a control authority transfer user interface screen (operation 1802).

In an embodiment, the second electronic device 200 may receive a selection of a control authority transfer rejection from a user of the second electronic device 200 (operation 1803).

A case of receiving the selection of the control authority transfer rejection may include a case in which no input is received from the user of the second electronic device 200 for a preset time in response to an output of the control authority transfer user interface screen.

In an embodiment, the second electronic device 200 may transmit a control authority transfer reject signal to the first electronic device 100 (operation 1804).

In an embodiment, in response to the control authority transfer reject signal being received from the second electronic device 200, the first electronic device 100 may output a control authority forcible transfer user interface screen (operation 1805).

In an embodiment, when the first electronic device 100 receives a selection of a control authority forcible transfer from a user of the first electronic device 100 (operation 1806), the first electronic device 100 may determine whether it is possible for the first electronic device 100 to perform an operation according to the first control signal from the first control device 110 (operation 1807). In an embodiment, when the first electronic device 100 determines that it is possible for the first electronic device 100 to perform the operation according to the first control signal (YES), the first electronic device 100 may perform the operation according to the first control signal (operation 1808).

In an embodiment, when the first electronic device 100 determines that it is not possible for the first electronic device 100 to perform the operation according to the first control signal (NO), the first electronic device 100 may generate a second control signal corresponding to the first control signal (operation 1809). **In** an embodiment, the second control signal corresponding to the first control signal may be a control signal including control code information with respect to the external device 130.

In an embodiment, the first electronic device 100 may transmit the second control signal to the first control device 110 or may directly transmit the second control signal to the external device 130.

An operation method of an electronic device and the device according to some embodiments may be embodied in the form of a recording medium such as a program module which include instructions executable by a computer. The computer-readable recording medium may include any usable medium that may be accessed by computers, volatile and non-volatile medium, and detachable and non-detachable medium. Also, the computer-readable recording medium may include all of a computer storage medium and a communication medium. The computer storage medium includes all volatile and non-volatile media, and detachable and non-detachable media which are technically implemented to store information including computer-readable instructions, data structures, program modules or other data. The communication medium includes computer-readable instructions, a data structure, a program module, other data as modulation-type data signals such as carrier signals, or other transmission mechanism, and includes other information transmission media.

According to an embodiment of the present disclosure, an electronic device and an operation method including receiving a request for external signal sharing, outputting a device list, in response to receiving the request for execution of the external signal sharing function, receiving a selection of an external device to provide an image signal and an external electronic device to share the image signal, and sharing the image signal of the selected external device with the selected external electronic device may be implemented as a computer program product including computer-readable recording medium/storage medium having recorded thereon a program for implementing the operation method of the electronic device.

A machine-readable storage medium may be provided in the form of a non-transitory storage medium. Here, the term 'non-transitory storage medium' may mean that the storage medium is a tangible device and does not include signals (e.g., electromagnetic waves), and may mean that data may be permanently or temporarily stored in the storage medium. For example, the 'non-transitory storage medium' may include a buffer in which data is temporarily stored.

According to an embodiment of the present disclosure, the method according to various embodiments of the present disclosure may be included and provided in a computer program product. The computer program product may be traded as a product between a seller and a buyer. The computer program product may be distributed in the form of a machine-readable storage medium (e.g., a compact disc read only memory (CD-ROM)) or may be distributed (e.g., downloaded or uploaded) online through an application store or directly between two user apparatuses (e.g., smartphones). In a case of online distribution, at least a portion of the computer program product (e.g., a downloadable application) may be at least temporarily stored or temporarily generated in a machine-readable storage medium such as a manufacturer's server, a server of an application store, or a memory of a relay server.

## Claims

1. An electronic device comprising:
a display;
a user input unit;
a communication unit;
a memory storing one or more instructions; and
at least one processor configured to execute the one or more instructions stored in the memory,
wherein the at least one processor is configured to execute the one or more instructions to
output a device list via the display, in response to receiving a request for external signal sharing,
receive, via the user input unit, a selection of an external device to provide an image signal and an external electronic device to transmit or receive an image signal, from the device list, and
transmit or receive an image signal of the selected external device to the external electronic device or from the external electronic device, via through the communication unit.

2. The electronic device of claim 1, wherein the at least one processor is configured to execute the one or more instructions to
identify whether the electronic device is a source device or a sink device, and
the source device is a device configured to transmit an image signal received from an external device to an external electronic device, via a communication unit, and the sink device is a device configured to receive, via a communication unit, an image signal that the source device receives from the external device.

3. The electronic device of claim 2, wherein
the device list comprises at least one of a sink device list and a source device list, and an external device list,
at least one of the sink device list and the source device list comprises identification information of the electronic device, and
the at least one processor is configured to execute the one or more instructions to
identify whether the electronic device is the source device or the sink device, in response to the identification information of the electronic device being selected from one of the sink device list and the source device list via the user input unit.

4. The electronic device of claim 2, wherein
the device list comprises at least one of a sink device list and a source device list, and an external device list, and
the at least one processor is configured to execute the one or more instructions to
output a first output device comprising the sink device list and the external device list, in response to the electronic device being selected as the source device,
output a second device list comprising the source device list and the external device list, in response to the electronic device being selected as the sink device, and
the second device list is a list in which external devices comprised in the external device list and source devices connected via an external device interface are mapped to each other.

5. The electronic device of claim 2, wherein, when the electronic device is
the source device,
the electronic device further comprises:
an external device interface; and
an encoder, and
the at least one processor is configured to execute the one or more instructions to
receive an image signal of the external device from the external device via the external device interface,
encode the image signal of the external device via the encoder, and
transmit the encoded image signal of the external device to the external electronic device via the communication unit.

6. The electronic device of claim 5, wherein the at least one processor is
configured to execute the one or more instructions to output a user interface screen for inquiring whether to output, via the electronic device, the image signal of the external device received from the external device, and
output the image signal of the external device via the display, in response to an output of the image signal of the external device being selected via the user input unit in response to an output of the user interface screen.

7. The electronic device of claim 1, wherein the at least one processor is
configured to execute the one or more instructions to transmit a query signal for inquiring whether to accept execution of the external signal sharing function to the external electronic device, and in response to an answer signal to accept execution of the external signal sharing function being received from the external electronic device in response to the query signal, transmit or receive the image signal of the external device to or from the external electronic device.

8. The electronic device of claim 7, wherein the at least one processor is
configured to execute the one or more instructions to,
when the electronic device has a history of executing the external signal sharing function with the external electronic device, transmit or receive the image signal of the external device to or from the external electronic device, without transmitting the query signal and receiving the answer signal.

9. The electronic device of claim 1, wherein the device list comprises information about one or more external electronic devices that use a same local network as the electronic device.

10. The electronic device of claim 9, wherein the information about the one or more external electronic devices comprises network signal strength information for each external electronic device.

11. The electronic device of claim 1, wherein the device list comprises information about one or more external electronic devices that have a same user account as the electronic device.

12. The electronic device of claim 1, wherein the at least one processor is
configured to execute the one or more instructions to identify whether the electronic device has control authority over the external device, in response to a first control signal for controlling the external device being received from a control device,
identify whether the electronic device is able to perform an operation according to the first control signal, in response to the electronic device having control authority over the external device,
perform the operation according to the first control signal when the electronic device is able to perform the operation according to the first control signal, and
when the electronic device is not able to perform an operation according to the first control signal, generate a second control signal corresponding to the first control signal, wherein the second control signal comprises control code information corresponding to the external device.

13. The electronic device of claim 12, wherein a case where the electronic device has control authority corresponds to at least one of a case where the electronic device is the source device, a case where the electronic device outputs the image signal of the external device via the display prior to the external electronic device, and a case where the control authority is transferred from the external electronic device.

14. An operation method of an electronic device, the operation method comprising:
receiving a request for external signal sharing;
outputting a device list, in response to receiving the request for execution of the external signal sharing function;
receiving a selection of an external device to provide an image signal and an external electronic device to transmit or receive an image signal, from the device list; and
transmitting or receiving an image signal of the selected external device to the external electronic device or from the external electronic device.

15. A computer-readable recording medium having recorded thereon a program to perform, by a computer, the operation method of claim 14.
